# EUROPÄISCHE PATENTSCHRIFT

(11) **EP 1 583 696 B1**
(45) Veröffentlichungstag und Bekanntmachung des Hinweises auf die Patenterteilung: **30.11.2011**
(21) Anmeldenummer: 04700967.5
(22) Anmeldetag: 09.01.2004
(51) Int. Cl.: B65C 3/06, B29C 65/00, B29C 65/18, B29C 65/78, B29B 13/02

(54) **VERFAHREN UND VORRICHTUNG ZUM ANBRINGEN EINES FOLIENSTÜCKS AUF EINEN DOSENKÖRPERS**
METHOD AND DEVICE FOR APPLYING A FILM PIECE TO A CAN BODY
PROCEDE ET DISPOSITIF DE FABRICATION D'UNE CANETTE, ET CANETTE

(30) Priorität: 17.01.2003 CH 642003
(43) Veröffentlichungstag der Anmeldung: 12.10.2005
(73) Patentinhaber: CREBOCAN AG, 9606 Bütschwil (CH)
(72) Erfinder: BOLTSHAUSER, Werner, 9606 Bütschwil (CH)
(74) Vertreter: Stocker, Kurt
(86) Internationale Anmeldenummer: PCT/CH2004/000004
(87) Internationale Veröffentlichungsnummer: WO 2004/065273

(56) Entgegenhaltungen:
- DE-A- 19 716 079
- US-A- 3 767 496
- US-A- 3 865 662
- US-A- 3 952 676
- US-A- 4 250 798

## Beschreibung

Die Erfindung bezieht sich auf ein Verfahren nach dem Oberbegriff des Anspruches 1 und auf eine Vorrichtung nach dem Oberbegriff des Anspruches 7.

Zur Vereinfachung der Herstellung von Gefässen, insbesondere Aerosoldosen mit einem Dekor, können bei den verbreiteten Herstellungsverfahren einzelne Bearbeitungsschritte vereinfacht oder gegebenenfalls weggelassen bzw. ersetzt werden. Aus der WO95/34474 ist beispielsweise ein Verfahren bekannt, bei dem auf die Reinigung, Grundlackierung, Bedruckung und Überlackierung der Gefässaussenfläche im Wesentlichen verzichtet werden kann. Das Dekor wird auf eine Folie aufgedruckt und die Folie wird dann auf die Gefässaussenfläche aufgebracht. Durch das Aufbringen des Dekors in der Form einer Folie ergeben sich verschiedene Vorteile. Zunächst ist es nicht erforderlich, alle für die Gefässherstellung nötigen Vorgänge unmittelbar hintereinander ablaufen zu lassen. Die bedruckte Folie kann vollständig bedruckt bezogen werden und muss somit nicht in der Anlage zur Dosenherstellung bedruckt werden. Beim Reinigungsvorgang wird eingespart, weil das Aufbringen einer fertigen, blattförmigen Schicht weniger heikel ist als das Lackieren, insbesondere hinsichtlich möglicher Fettrückstände. Eine weitere Ersparnis ergibt sich durch das Wegfallen von Trocknungsvorgängen. Durch das Weglassen verschiedener Anlagenteile vermindern sich auch die Investitionskosten.

Lösungen bei denen ein Etikett um ein Gefäss gewickelt und festgesetzt wird, wie z.B, aus US 3952676 bekannt, haben den Nachteil, dass das Anordnen und Festsetzen nicht sehr präzise erfolgen kann. Eine solche Etikett-Folie haftet nicht überall gleich gut am Gefäss, so dass die Folie gegebenenfalls aufgerissen werden kann. Klebstoffrückstände im Überlappungsbereich und das ungenügende Anliegen am Gefäss führen zu einer unattraktiven Erscheinung. Gemäss anderen Lösungen werden geschlossene Schrumpffolien-Abschnitte an Gefässen festgeschrumpft. Wenn aus einer bedruckten Schrumpffolie ein schlauchförmiges Zwischenprodukt - ein sleeve - hergestellt wird, so muss ein Folienband so umgelegt werden, dass die beiden Seitenränder überlappend zusammentreffen. Die überlappenden Seitenränder werden mittels eines aufgebrachten Klebstoffes miteinander verbunden. Das geschlossene Band wird flach gedrückt und mit zwei seitlichen Falzlinien aufgerollt. Beim Herstellen eines schlauchförmigen Folienbandes treten Umfangs-Ungenauigkeiten auf. Zudem führt auch der verwendete Klebstoff zu optischen Mängeln und die zwei Falte, die vom Flachdrücken und Aufrollen herrühren, bleiben am Gefäss sichtbar. Weil die Schrumpffähigkeit eines-Folienschlauches in dessen Längsrichtung erhöht ist, würde ein auf das Gefäss aufgebrachter Schlauchabschnitt in der Richtung der Gefässachse mehr schrumpfen als in der Umfangsrichtung, was ein exaktes Anlegen des Folienschlauches erschwert. Um auch in Umfangsrichtung ein genügendes Schrumpfen gewährleisten zu können, müsste die Folie dick gewählt werden, was mit höheren Kosten und einer unerwünscht hohen Stufe beim Überlappungsbereich verbunden wäre.

Nebst den verschiedenen Dosenformen sind auch verschiedene Verfahren zum Herstellen von Dosenkörpern bekannt. Bei einteiligen Aerosol-Aludosen wird der zylindrische Dosenkörper mittels Kaltfliesspressen bereitgestellt. Anschliessend wird am offenen Ende mittels Stauch-Necking ein Ventilsitzes ausgebildet. Die US 4 095 544 und die EP 0 666 124 A1 beschreiben das Herstellen nahtfreier Stahldosen. Dabei wird der zylindrische Dosenkörper mittels Stanzen, Pressen und Abstrecken aus einem mit Zinn bzw. mit Kunststoff beschichteten Stahlblech hergestellt. Stark verbreitet sind auch Dosen aus Stahlblech, bei denen der Mantel eine Längs-Schweissnaht aufweist. Der Boden und der obere Abschluss sind über Falzverbindungen am Dosenmantel befestigt. Aus den Schriften EP 200 098 A2 und EP 208 564 sind zwei- und mehrteilige Dosen bekannt, bei denen die Teile mittels Laserschweissen verbunden sind. Aufgrund der verschiedenen Formen und der bei einzelnen Dosentypen äusserst dünnen Dosenwand ist es nicht zweckmässig die Dekorfolie direkt auf den Dosenkörper aufzuwickeln und am Dosenkörper zu einer geschlossenen Folienhülle zu verbinden. Das Verbinden der Folienenden mit einem Klebstoff wäre zu aufwendig und würde von der Festigkeit her sowie ästhetisch nicht befriedigen. Um die Folienenden mit einer Siegelverbindung zu verbinden, müsste eine Siegelfläche gegen denn Dosenkörper gepresst werden, was bei dünnwandigen Dosen aufgrund der zu kleinen Stabilität nicht zweckmässig ist. Bei Dosen deren Aussenfläche am unteren und insbesondere am oberen Dosenende verengt sind, bzw. von einer zylindrischen Fläche abweichen, könnte die Siegelverbindung nicht über die gesamte Dosenhöhe erzielt werden.

Aus den Schriften US 4 199 851, DE 197 16 079 sind Lösungen bekannt, bei denen schrumpffähiges Kunststoff-Flachmaterial um einen Wickeldorn gewickelt, zu geschlossenen Hüllen ausgebildet und als Rundum-Etiketten in axialer Richtung nach oben auf eine Flasche aufgeschoben und festgeschrumpft werden. Die Rundum-Etiketten müssen eine genügende Stabilität aufweisen damit sie von einem an der Unterkante stossenden Ringteil nach oben bis in den Etikettenbereich der Flaschen bewegt werden können. Dies ist nur bei der Verwendung von Kunststoffmaterial mit einer grossen Dicke möglich. Aus der EP 397 558 A1 ist eine Lösung bekannt, bei der Rundum-Etiketten von zwei teilringförmigen Zangenteilen an einem Innenteil festgeklemmt und nach unten über eine Flasche gezogen werden. Weil die Rundum-Etikette aufgrund der Haftreibung an den Zangenteilen über den festen Innenteil und über die Flasche gezogen werden muss, kann auch diese Lösung nur bei äusserst festen bzw. dicken Rundum-Etiketten, deren Innenfläche zudem gute Gleiteigenschaften hat, angewendet werden. Gemäss der EP 547 754 A2 werden die Rundum-Etiketten mit parallel ausgerichteten, radial bewegbaren Haltestäben von der Innenseite her aufgespannt und über die Flasche gezogen. Das Aufspannen mit den nach aussen drückenden Stäben ist nur bei genügend robusten und somit dicken Folien möglich. Dünne Folien würden verformt und/oder beschädigt. Um die Reibung an der Flasche zu vermindern, wird aus den Stäben Luft ausgeblasen. Beim Erreichen der gewünschten Position relativ zur Flache müssen von aussen zugeführte zangenförmige Greifer die Rundum-Etikette festklemmen, so dass die innen angeordneten Stäbe ohne Verschiebung der Rundum-Etikette herausgezogen werden können. Das aus dem Stande der Technik bekannte Übertragen von Rundum-Etiketten auf Flaschen ist aufwendig und für dünne Folien ungeeignet.

Weil sich die Etiketten bei Flaschen nur über einen mittleren Bereich erstrecken, können die Flaschen beim Anbringen der Rundum-Etiketten problemlos in einem oberen oder unteren Bereich, vorzugsweise am Gewinde bei der Öffnung, gehalten werden. Wenn eine Folie als Dekorschicht auf eine Dose aufgebracht wird, so muss die Folie im Wesentlichen den gesamten Bereich der Aussenfläche abdecken, so dass ein Halten, wie bei Flaschen nicht möglich ist.

Um eine geschlossene Folienhülle auf einem Dosenkörper anzuordnen, wird gemäss EP 1 153 837 A1 die Vorderkante eines Dekorfolienstückes an einem Wickeldorn gehalten. Die Hinterkante des Dekorfolienstückes soll nach dem Aufwickeln des Folienstückes die Vorderkante überlappen. Im Überlappungsbereich wird eine schmale, parallel zur Dosenlängsachse verlaufende Siegelfläche radial nach innen gegen den Wickeldorn bewegt. Damit im Überlappungsbereich eine Siegelverbindung erzielbar ist, müssen die Folienstücke so bedruckt und zugeschnitten sein, dass bei der Vorderkante und gegebenenfalls bei der Hinterkante ein unbedruckter Bereich vorliegt. Im unbedruckten Bereich sollen die beidseits der Kunststofffolie ausgebildeten Siegelschichten direkt aneinander anliegen und nach dem Versiegeln eine feste Verbindung bilden. Es hat sich nun gezeigt, dass bei Kunststofffolien aufgrund ihrer Elastizität nach dem Drucken und Schneiden das sichere Vorliegen von schmalen unbedruckten Bereichen bei der Vorder- und gegebenenfalls bei der Hinterkante nicht gewährleistet werden kann. Dies liegt daran, dass die Folien als lange Bahnen zum Drucken und zum Schneiden von Rollen abgewickelt werden müssen. Die zum Abwickeln benötigte Kraft variiert vom Rollenanfang bis zum Ende. Dadurch ändert sich auch die auf die Folie wirkende Dehnkraft, was zu den erwähnten Ungenauigkeiten führen kann. Wenn nun zum Kompensieren der Ungenauigkeit der unbedruckte Bereich vergrössert wird, entsteht auf dem mit der Folie versehenen Dosenkörper ein unerwünschter Längsstreifen ohne Dekorschicht.

Wenn die parallel zur Dosenlängsachse verlaufende Siegelfläche radial nach innen gegen den Wickeldorn bewegt wird, ist es schwierig entlang der gesamten Siegelfläche einen gleichen Anpressdruck zu gewährleisten. Weil dem Wickeldorn auf einer Stirnseite zum Übergeben einer Folienhülle der Dosenkörper zugeordnet werden muss kann der Wickeldorn nur auf einer Stirnseite gelagert werden. Aufgrund der einseitigen Lagerung ergibt sich beim Anpressen der Siegelfläche eine kleine Kipp-Auslenkung des Wickeldornes von der Siegelfläche weg. Die damit verbundene kleine Rutschbewegung zwischen Wickeldorn und Siegelfläche sowie der in Richtung der Achse des Wickeldornes sich ändernde Anpressdruck können zu einem Verzug, gegebenenfalls Rümpfen im Überlappungs- und Siegelbereich und einer ungenügenden Siegelung führen. Dies kann die ästhetische Wirkung der Dekorfolie auch nach dem Übertragen und dem Festschrumpfen auf den Dosenkörper beeinträchtigen. Es hat sich zudem gezeigt, dass in Achsrichtung des Wickedornes beidseits der Siegelfläche Drucklinien bzw. Abdrücke der seitlichen Randlinien der Siegelfläche, auftreten können, die auch am Dosenkörper noch sichtbar sind.

Bei den in der EP 1 153 837 A1 erwähnten dünnen Dekorfolien mit einer Dicke von weniger als 25µm, vorzugsweise zwischen 9µm und 21 µm ergeben sich beim Verschieben der geschlossenen Folienhüllen vom Wickeldorn auf den Dosenkörper grosse Probleme. Die vorgeschlagene bedruckbare, handelsübliche Kunststofffolie Label-Lyte ROSO LR 400, der Firma Mobil Oil Corporation umfasst beidseits eine dünne Siegelschicht und ist mit einer Dicke von 20µm und von 50µm erhältlich. Beim Versiegeln des Überlappungsbereiches wird auch die am Wickeldorn anliegende Siegelschicht erwärmt und an den Wickeldorn gepresst. Damit die am Wickeldorn zylinderförmig geschlossene Folie nicht am Wickeldorn festgesiegelt wird, müssen die Siegelschicht und die Aussenfläche des Wickeldornes so ausgebildet sein, dass sie auch nach einem Siegelvorgang nicht aneinander haften. Trotzdem sind die Haft- und Gleiteigenschaften im Bereich der Siegelnaht etwas anders als im restlichen Folienbereich. Dies kann beim Bewegen der Folienhüllen vom Wickeldorn auf den Dosenkörper zu Problemen führen. Wenn die Folienhülle in einem Teilbereich etwas weniger gut vom Wickeldorn und auf den Dosenkörper rutscht, so kann sie sich am Wickeldorn bzw. am Dosenkörper verklemmen. Weitere Probleme können durch reibungsbedingte elektrostatische Ladungen und die damit verbundenen auf die Folie wirkenden elektrostatischen Kräfte entstehen. Die Übertragung der zylinderförmig geschlossene Folie vom Wickeldorn auf einen Dosenkörper ist daher problematisch, auch wenn der Durchmesser des Wickeldornes wenig grösser ist als der Durchmesser des Dosenkörpers. Ein deutlicher Grössenunterschied ist nicht erwünscht, weil sonst auch die Schrumpffähigkeit der Folie grösser sein muss und die Gefahr besteht, dass sich beim Festschrumpfen Rümpfe bilden. Zur Erhöhung der Schrumpffähigkeit müsste eine Folie mit grösserer Dicke eingesetzt werden, was nicht erwünscht ist.

Der vorliegenden Erfindung liegt daher die Aufgabe zugrunde, eine Lösung zu finden mit der Folienhüllen aus verschiedenartigen Folien, insbesondere auch aus besonders dünnen, bereitgestellt, dem Bedarf gemäss optimal bedruckt sowie von einem Wickeldorn auf einen Dosenkörper übertragen werden können.

Diese Aufgabe wird durch die Merkmale des Anspruches 1, bzw. des Anspruches 7 gelöst. Die abhängigen Ansprüche beschreiben bevorzugte bzw. alternative Ausführungsformen. Unter Dosenkörpern sollen alle Gefässe, insbesondere auch gefässförmige Zwischenprodukte verstanden werden.

Beim Lösen der Aufgabe wurde in einem ersten erfinderischen Schritt erkannt, dass das Verbinden eines Folienstückes zu einer geschlossenen Folienhülle nicht an der konvexen Aussenfläche eines Wickeldornes erfolgen soll. Der Wickeldorn ist dazu geeignet, das Folienstück in die Form einer Zylinderfläche zu bringen, wobei die Hinterkante des Dekorfolienstückes nach dem Aufwickeln des Folienstückes die Vorderkante in einem Überlappungsbereich überlappt. Für das Erzielen einer perfekten Siegelverbindung und das einfache Übertragen der geschlossenen Folienhülle an einen Dosenkörper ist aber eine konkave Innenfläche, an der zumindest ein Teil der Folie mit dem Überlappungsbereich anliegt, besser geeignet. Die zum Erzielen der Siegelverbindung nötige Anpresskraft zwischen einer konkaven Pressfläche in der Form einer Teilfläche der konkaven Innenfläche und einer konvexen Pressfläche in der Form einer Pressleiste kann durch eine beim Pressen vorgesehene Abstützung einer Betätigungsvorrichtung für die Pressleiste an der konkaven Innenfläche direkt von einem Anlageteil, beispielsweise einem Rohrteil mit der konkaven Innenfläche, aufgenommen werden. Die Pressleiste ist beispielsweise direkt am Wickeldorn angeordnet Die Presskräfte müssen aufgrund der Abstützung nicht über die einseitige Lagerung des Wickeldornes übertragen werden und sind somit im wesentlichen über die gesamte Höhe des Überlappungsbereiches gleich bzw. konstant. Zudem kann die konkave Innenfläche ohne Verklemmungsprobleme mit der Folienhülle zusammen über einen Dosenkörper gestossen, bzw. der Dosenkörper nach der Entnahme des Wickeldornes, bzw. der konvexen Pressfläche, in die konkave Innenfläche und die daran gehaltene Folienhülle eingeführt werden. In dieser Lage kann die Folienhülle durch einen Schrumpfvorgang von der konkaven Innenfläche an die Mantelfläche des Dosenkörpers übertragen werden. Gegebenenfalls wird lediglich ein schmaler Ringbereich an den Dosenkörper geschrumpft, mit dem gewährleistet ist, dass die Folienhülle am Dosenkörper bleibt und somit der Dosenkörper von der konkaven Innenfläche getrennt einem Schrumpfprozess unterworfen werden kann, der ein rumpffreies Anliegen am Dosenkörper gewährleistet. Dieser Schrumpfprozess kann beispielsweise in einem Ofen durchgeführt werden.

In einem zweiten erfinderischen Schritt wurde erkannt, dass beim Erzielen der Siegelverbindung an der konkaven Innenfläche die radial nach aussen bewegte Pressleiste keine Wärme zuführen muss und daher auf einen haftungsfreien Kontakt und eine optimale Pressung ausgelegt werden kann. Weil die Folienhülle ja anschliessend an das Ausbilden der Verbindung im Überlappungsbereich mit ihrer Innenseite an einem Dosenkörper festgesiegelt wird, muss diese auf der Innenseite eine Siegelschicht aufweisen. Daher liegt die nach aussen bewegte Pressleiste beim Ausbilden der Verbindung an einer Siegelschicht an. Der zum Erzielen der Verbindung eingesetzte Bereich der Siegelschicht ist im Überlappungsbereich auf der Innenseite der äusseren Folienlage, bzw. der Hinterkante, angeordnet. Damit zuerst dieser Bereich der Siegelschicht einen Siegelvorgang durchmacht, sollte die Wärme beispielsweise von einer gut Wärme leitenden Teilfläche der konkaven Innenfläche her zugeführt werden. Entsprechend kann die nach aussen bewegte Pressleiste so ausgebildet werden, dass sie nicht an der Siegelschicht haftet und dass sie keine Pressabdrücke hinterlässt. Sie kann also breiter als der Überlappungsbereich und/oder nachgiebig und/oder aus einem Material, das mit der Siegelschicht nicht in Haftverbindung treten kann, ausgebildet werden.

Die konkave Innenfläche wird beispielsweise von einem kreiszylindrischen Rohrteil, bzw. einem rohrförmigen Halteteil, gebildet und ein zylindrischer Wickeldorn umfasst in einem ersten Umfangsbereich eine Pressleiste sowie gegebenenfalls in zumindest einem zweiten, insbesondere um 180° zum ersten versetzten, Umfangsbereich eine Abstützleiste. Nachdem das Folienstück um den Wickeldorn gewickelt und der Wickeldorn im Rohrteil angeordnet ist, wird ein Übergabeschritt durchgeführt, bei dem das Folienstück, vorzugsweise mittels einer Druckdifferenz, von der konvexen Aussenfläche des Wickeldornes an die konkave Innenfläche des Halteteiles übertragen wird. Dazu wird beispielsweise von Austrittsöffnungen an der Aussenfläche des Wickeldornes Luft gegen das Folienstück geführt und/oder es wird etwa an Öffnungen der Innenfläche des Rohrstückes ein Unterdruck erzeugt. Bei der Übergabe des Folienstückes vom Wickeldorn zum Haltestück wird das Folienstück über einen engen Ringraum bewegt. Der Umfang wird dabei etwas erhöht und entsprechend wird der Überlappungsbereich etwas verkleinert. Bei der Übergabe wird aufgrund der Umfangserhöhung die Hinterkante relativ zur Vorderkante etwas bewegt, wodurch das faltenfreie aneinander Anliegen der beiden Folienenden im Überlappungsbereich noch verbessert wird. Wenn nun die Pressleiste an den Überlappungsbereich bewegt wird, kann ein glattes Anliegen und eine exakte Verbindung gewährleistet werden. Damit die für das Siegeln nötige Wärme im Wesentlichen nur dem Überlappungsbereich zugeführt wird, ist am Halteteil beispielsweise eine Heizleiste ausgebildet, an welche in Umfangsrichtung gegebenenfalls beidseits je ein Isolationsbereich anschliesst. Die Temperatur der Heizleiste ist an die Siegelschicht, bzw. deren Siegeltemperatur, an die Wärmeleitung der Folie und die für die Siegelung vorgesehene Zeit angepasst.

Nach dem Ausbilden der Siegelverbindung im Überlappungsbereich werden der Wickeldorn und das Halteteil mit der geschlossenen Folienhülle in Achsrichtung relativ zueinander bewegt. Anschliessend erfolgt in Achsrichtung eine Relativbewegung zwischen einem Dosenkörper und dem Halteteil mit der geschlossenen Folienhülle, so dass die Folienhülle um den Dosenkörper angeordnet wird. Um die Folienhülle zumindest in einem Ringbereich mit dem Dosenkörper in haltenden Kontakt zu bringen, wird zumindest in einem Ringbereich ein Schrumpfvorgang ausgelöst. Dazu kann beispielsweise Heissluft, insbesondere von einer Stirnseite des Dosenkörpers bzw. des Halteteiles her, in den Ringraum zwischen Dosenkörper und Halteteil eingebracht werden. Die Heissluft muss die Folienhülle in diesem Ringbereich auf eine Temperatur erhitzen, bei welcher der Schrumpfvorgang abläuft. Weil die Schrumpftemperatur über der Siegeltemperatur liegt, wird beim Kontakt zum Dosenkörper gegebenenfalls direkt ein Festsiegeln erzielt. Wenn das Festsiegeln im Wesentlichen erst nach dem Anliegen der Folienhülle am Dosenkörper erfolgen soll, so ist es gegebenenfalls zweckmässig die Wärme, insbesondere die Heissluft, vom Halteteil her der Folienhülle, bzw. einem Ringbereich derselben, zuzuführen.

Wenn die Folie sich im Bodenbereich des Dosenkörpers etwas über den Boden hinaus erstreckt, so kann sie sich nach dem Schrumpfvorgang zumindest bis über einen äusseren Ringbereich des Dosenbodens erstrecken. Bei Dosenkörpern mit Standflächen in diesem äusseren Ringbereich ist die Standfläche durch die anliegenden Folie abgeschlossen, so dass auch bei der Verwendung von oxidierbarem Dosenmaterial die Standfläche vor dem Oxidieren geschützt ist. Um zu gewährleisten, dass die Folie im Bereich ihres unteren Randes immer am Dosenkörper verbleibt, wird gegebenenfalls eine äussere Bodenabdeckung so am Boden angeordnet, dass diese den Folienrand überlappt. Gegebenenfalls erstreckt sich diese Bodenabdeckung bis zur Mantelfläche des Dosenkörpers und deckt somit die Standfläche ab und verhindert so das Auftreten von Korrosionsproblemen. Das Flachmaterial wird an einem ringförmigen Verbindungsbereich des Dosenkörpers festgesetzt. Wenn die Verbindung entlang einer geschlossenen Kreislinie ausgebildet wird, so erhält die membranförmige Bodenabdeckung eine hohe Stabilität.

Die Bodenabdeckung wird beispielsweise in einem Hauptbereich, der vom ringförmigen Verbindungsbereich umgeben ist, im Wesentlichen flach ausgebildet und umfasst vorzugsweise den Aufdruck eines Strichcodes. Wenn der Strichcode an einer im wesentlichen ebenen Bodenfläche angebracht werden kann, so wird an der Dosenwand kein Strichcode benötigt und eine Beeinträchtigung der Gestaltungsmöglichkeit der Dosenwand fällt weg. Auch werden zum Drucken des Dekors der Dosenwand keine Druckwalzen für den Strichcode benötigt. Es können grosse Mengen von Dosenkörpern mit einem attraktiven Standart Dekor an der Dosenwand hergestellt werden. Möglicherweise wechselnde Informationen, bzw. Informationen die nicht für alle Länder gleich sind, wie der Strichcode oder auch das Abfülldatum, und/oder ästhetisch störende Informationen werden auf die Bodenabdeckung gedruckt. Diese gegebenenfalls unterschiedlichen Bodenabdeckungen können kurz vor dem Abfüllungszeitpunkt einzelner Produktechargen bedruckt und an den Standard Dosenkörper festgesetzt werden. Dadurch kann die gleiche Dose für alle Länder und alle Abfüllchargen verwendet werden. Weil die Bodenabdeckung im Bereich des Strichcodes flach ausgebildet werden kann, ist der Strichcode besser lesbar als ein an der gekrümmten Dosenwand angebrachter Strichcode. Wenn sich die Beschichtung der Aussenseite der Dosenwand in der Form der Dekorfolie bis zur äusseren Berandung der Bodenabdeckung erstreckt, so kann verhindert werden, dass am unteren Dosenende ein metallischer Rand sichtbar ist.

Die Bodenabdeckung wird vorzugsweise in der Form von Kunststoffflachmaterial ausgebildet. Es versteht sich von selbst, dass auch Flachmaterial mit zumindest einer Metall-, insbesondere Aluminium- oder Stahl-Schicht, oder auch mit einer Kartonschicht eingesetzt werden kann. Dabei ist die stabilitätsgebende Schicht gegebenenfalls mit Kunststoff beschichtet. Die eingesetzten Flachmaterialien sollen eine robuste Bodenabdeckung gewährleisten, die auf den Fördereinrichtungen der Abfüllanlagen nicht verletzt wird und auch beim Stehen auf nassen Unterlagen möglichst beständig bleibt. Die oben erwähnten Flachmaterialien können alle mit einer Siegelschicht versehen und somit am Boden festgesiegelt werden. Anstelle einer Siegelverbindung kann zum Festsetzen der Bodenabdeckung gegebenenfalls auch eine Einrastverbindung oder eine Schweissverbindung, insbesondere mit zumindest drei Laser-Schweisspunkten; ausgebildet werden. Wenn eine magnetisierbare Bodenabdeckung verwendet wird, so kann diese auch bei Dosenkörpern aus nicht magnetisierbarem Material eine Förderung mit Magnetförderern ermöglichen.

Weil die Bewegungen zwischen dem Wickeldorn und dem Halteteil beim Zusammenführen in Achsrichtung mit einem grossen Weg verbunden ist, kann der Halteteil gegebenenfalls auch aus mindestens einem Teilrohr bzw. Halbrohr gebildet werden, so dass das Zusammenführen durch eine Bewegung quer zur Achsrichtung dieser Teile erzielt werden kann. Um trotzdem ein im wesentlichen vollständiges Umschliessen des Wickeldornes gewährleisten zu können, umfasst der Halteteil beispielsweise zumindest zwei Segmente eines Rohres die auseinander fahrbar oder schwenkbar miteinander verbunden sind. Nach dem Zusammenführen des Wickeldornes und eines Segmentes kann das mindestens eine weitere Segment zugeführt bzw. zugeschwenkt werden. Zur Trennung des Wickeldornes von den mindestens zwei Segmenten des Halteteiles an denen nun die geschlossene Folienhülle gehalten ist, muss eine Bewegung in Achsrichtung durchgeführt werden.

Das oben beschriebene Verfahren ist besonders vorteilhaft einsetzbar bei der Verwendung einer Folie die gegebenenfalls auf ihrer Aussenseite bzw. Vorderseite, vorzugsweise aber auf der dem Dosenkörper zugewandten Seite bzw. Rückseite bedruckt ist. Bei einer transparenten Folie, die auf der Rückseite bedruckt ist, wird die Druckschicht von der Folie geschützt, so dass keine reibungsbedingten Beeinträchtigungen des Dekors entstehen können. Eine auf der Rückseite bedruckte transparente Folie kann nach dem Bedrucken über der Druckschicht mit einer Siegelschicht versehen werden, die auch durch die Druckschicht hindurch zwischen der Folie und dem Dosenkörper sowie im Überlappungsbereich zwischen den Folienrändern eine feste Siegelverbindung gewährleistet. Auf einen unbedruckten Bereich und auf das mit Problemen verbundene genaue Schneiden kann verzichtet werden. Weil die Bedruckung bis zur Schnittlinie bzw. durchgängig erfolgen kann, treten am Dosenkörper keine unbedruckten Umfangsbereiche auf.

Es ist gegebenenfalls vorteilhaft, wenn die Druckschicht auf der Folienrückseite im Wesentlichen die Funktion einer Grundierung übernimmt und das restliche Dekor auf der Vorderseite der Folie aufgedruckt wird. Wenn nun von Grundierung gesprochen wird, kann dies lediglich eine eintönige Grundfarbe oder aber auch ein Teil des Dekors, beispielsweise die flächige Farb- bzw. die Bildgestaltung, sein. Die auf der Rückseite in einer ersten Druckerei vorbedruckte Folienbahn wird in einem weiteren Druckschritt auf der Vorderseite bedruckt. Dieser weitere Druckschritt kann gegebenenfalls beim Dosenhersteller, bzw. in einer zweiten Druckerei, durchgeführt werden um spezifische Dekor-Informationen aufzubringen. Das heisst beispielsweise, dass zu einem Grunddekor im weiteren Druckschritt Beschriftungen aufgebracht werden, die für die jeweiligen Absatzmärkte unterschiedlich sind. Zum Bedrucken der Vorderseite können beliebige aus dem Stande der Technik bekannte Druckverfahren, gegebenenfalls mit nach dem Bedrucken durchgeführten Oberflächenbehandlungen, verwendet werden.

Ein Druckschritt mit einem Transferverfahren kann zum Bedrucken von Folienbahnen vorteilhaft einsetzt werden. Dabei gelangt zumindest eine, vorzugsweise aber gelangen verschiedene Farben, auf eine Übertragungsfläche und von der Übertragungsfläche in einem Schritt auf die Folie. Dieses Transferverfahren kann auf die Vorder- oder Rückseite der Folie oder auch auf beide Seiten erfolgen und ist unabhängig von der in der vorliegenden Erfindung beschriebenen Verwendung der Folie, insbesondere auch für Etiketten, neu und erfinderisch sowie vorteilhaft einsetzbar. Ein ähnliches Druckverfahren ist aus der US 4 245 583 bekannt, wobei dort Tuben, Dosen und Becher bedruckt werden. Für das Bedrucken von Bahnen wurden bis anhin nur Verfahren eingesetzt, bei denen die verschiedenen Farben nacheinander aufgetragen und zwischen den Auftragsstationen getrocknet werden. Aufgrund der grossen Länge von Bahnen besteht in der Fachwelt die Meinung das Bedrucken und Trocknen in hintereinander angeordneten Stationen sei immer zweckmässig. Gegenstände hingegen werden ganz anders betrachtet, weil an ihrem Umfang aufgrund der kurzen Umfangslänge nicht mehr als eine Druckstation angeordnet werden kann. Zwischen zwei Druckvorgängen müssen die Gegenstände durch eine Trocknungsvorrichtung geführt werden. Mit der vorliegenden Erfindung musste bezüglich des Bedruckens von Bahnen ein Vorurteil überwunden werden.

Gemäss dem Stande der Technik werden dünne Folien zum mehrfarbigen Bedrucken durch mehrere Druckbereiche mit jeweils einem Druckwerk und einer Trocknungsvorrichtung geführt, was mit einem grossen Vorrichtungs- und Energieaufwand verbunden ist. Zudem müssen die Teildrucke der einzelnen Druckwerke genau übereinstimmen, was aufgrund der Elastizität der dünnen Folien mit grossen Problemen verbunden ist. Bis die Teildrucke der verschiedenen Druckwerke richtig übereinander liegen, entsteht ein grosser Materialverlust. Zudem kann sich bei einer minimalen Veränderung der Foliendehnung die Überlagerung während des Druckvorganges leicht verschieben. Daher muss eine aufwendige Kontrolle und eine Korrektursteuerung vorgesehen werden.

Wenn nun die verschiedenen Teildrucke nass in nass auf eine Transferfläche, beispielsweise auf ein Gummituch oder einen Transferzylinder, aufgetragen werden, so kann das gesamte Druckbild in einem Schritt und somit ohne Übereinstimmungs-Problem auf die Folie übertragen werden. Es braucht lediglich ein Übertragungswerk und eine Trocknungsvorrichtung. Besonders vorteilhaft ist dieser vorderseitige Transferdruck bei einer transparenten Folie, die auf der Rückseite eine Grundierungsbedruckung aufweist. Aufgrund der Grundierungsbedruckung muss beim Transferdruck lediglich ein kleiner Flächenanteil der Transferfläche mit verschiedenen Farben versehen werden, was unerwünschte Effekte des nass in nass Farbauftrages auf die Transferfläche verhindert. Indem bei einer Folienbahn also beispielsweise die Rückseite mit mindestens einem Tiefdruckschritt und die Vorderseite mit einem Flex-Druck-Schritt, bzw. mit einen nass in nass Transferdruck, bedruckt wird kann ohne Überlagerungsproblemen mit kleinem Aufwand eine qualitativ hochstehende Dekorfolie für Etiketten und/oder Dosen-Aussenbeschichtung bereitgestellt werden. Weil die beiden Bedruckungsschritte getrennt ausgeführt werden können, ergibt sich bezüglich unterschiedlichen Kleinmengen ein grosser Spielraum. Dies ist auch bei Etiketten vorteilhaft, weil somit den verschiedenen Abfüllern eines Produktes, bzw. Verbrauchern einer Etikette, eine Folierolle mit einem Grunddekor auf der Rückseite der Folie zugestellt werden kann und die Abfüller, bzw. Verbraucher, vor dem Einsatz der Etiketten je unterschiedliche Drucke auf der Vorderseite der Folie anbringen können.

Mit erfindungsgemässen schrumpfbaren geschlossenen Folienhüllen können auch weitere Dekoreffekte erzielt werden. So kann beispielsweise auf der Aussenfläche des Dosenkörpers mindestens ein Strukturelement angeordnet werden, bevor die Folienhülle festgeschrumpft wird. Das Strukturelement wird von der Folienhülle gehalten und die Oberflächenstruktur des Strukturelementes ist durch die Folie erkennbar bzw. spürbar. Beispielsweise könnte also vor dem Anbringen der Dekorfolie ein Noppenring am Dosenkörper festgesetzt werden. Bei Dosenkörpern die aus Flachmaterial, insbesondere Blech, hergestellt werden, kann die Struktur auch direkt in das Flachmaterial geprägt sein, so dass auf das Anordnen eines Strukturelementes verzichtet werden kann. Die Dekorfolie könnte in einem Teilbereich transparent belassen werden, so dass das Strukturelement oder gegebenenfalls auch die Oberfläche des Dosenkörpers sichtbar bleibt. Wenn das Strukturelement sich nicht rund um den Dosenkörper erstreckt, so kann das Strukturelement auf dem Wickeldorn angeordnet werden, bevor das Folienstück aufgewickelt wird. Nach dem Aufwickeln des Folienstückes befindet sich das Strukturelement auf der Rückseite der Folie und kann bereits mit kleinen Haftungskräften am Folienstück gehalten zur konkaven Innenfläche und nach dem Einführen des Dosenkörpers mit der schrumpfenden Folie an diesen bewegt werden.

Das Übergeben des gewickelten Folienstückes vom Wickeldorn an eine konkave Innenfläche und das anschliessende Ausbilden einer Siegelverbindung ist auch zum Bereitstellen einer Dosen-Innenschicht in der Form einer Folie einsetzbar ist. Dabei wird ein Wickeldorn nach dem Aufwickeln eines Folienstückes dem Innern eines Dosenkörpers zugeführt. Durch das Zuführen von Druckluft zwischen den Wickeldorn und das Folienstück und/oder das Bewegen mindestens eines Bereiches der Mantelfläche des Wickeldornes radial nach aussen, kann das Folienstück zumindest bereichsweise gegen die konkave Innenfläche des Dosenkörpers gebracht werden. Gegebenenfalls wird radial ausserhalb des Folienstückes von einer Stirnseite her zwischen der Dosen Innenwand und dem Folienstück ein Unterdruck erzeugt, so dass das Folienstück sich aufgrund des Unterdruckes, bzw. aufgrund der Druckdifferenz zwischen den Teilräumen beidseits des Folienstückes an die Innenwand des Dosenkörpers anlegt. Die Länge des Folienstückes wird so gewählt, dass das an der Dosenwand anliegende Folienstück einen Überlappungsbereich aufweist. Wenn nun gegebenenfalls durch die Wand des Dosenkörpers hindurch der Folie Wärme zugeführt wird und die Folie auf der nach aussen gewandten Seite eine Siegelschicht aufweist, so kann beispielsweise zumindest im Überlappungsbereich eine Siegelverbindung zur Dosenwand und vorzugsweise auch eine Siegelverbindung zwischen den beiden Folienlagen erzielt werden. Um die Folie möglichst weitgehend an der Wand des Dosenkörpers fest zu siegeln, wird die Folie mittels eines Überdruckes und/oder mittels mindestens einer Pressfläche an die Wand gedrückt und im wesentlichen über die gesamte Mantelwand oder gegebenenfalls auch vom Doseninnem her Wärme zugeführt. Vorzugsweise wird vom Wickeldorn aus mit der konvexen Pressfläche einer Pressleiste gegen den Überlappungsbereich gedrückt. Weil im Doseninneren die Entstehung von Falten nicht störend ist, kann auch eine einseitig gelagerte Siegelleiste gegen den Überlappungsbereich gepresst werden. Um auch gegen den Dosenboden hin einen von der Folie gebildeten Abschluss zu erzielen, wird beispielsweise das aufgewickelte Folienstück über die Stirnseite vorstehen gelassen und vor dem Einführen in den Dosenkörper mittels Verschrumpfen oder Verdrehen verschlossen, wobei dieser Abschluss aufgrund der Rümpfe nicht eng an den Dosenboden angelegt werden kann. Gegebenenfalls wird aber an einer Stirnseite des Wickeldornes ein weiteres Folienstück in den Dosenkörper eingebracht und am Dosenboden festgesetzt, wobei insbesondere das der Wand zugeordnete und das dem Boden zugeordnete Folienstück dicht miteinander verbunden werden. Dies kann beispielsweise mit Hilfe eines gegen den ringförmigen Kontaktbereich zwischen den beiden Folienstücken pressbaren Siegelteil erzielt werden.

Indem gemäss der erfinderischen Lösung eine geschlossene Folienhülle problemlos auf einen Dosenkörper übertragen werden kann, wird es möglich dem Dosenkörper die Funktion der stabilen Struktur und der Folienhülle die Funktion des Dekors oder der Innenbarriere so zu übertragen, dass beide Funktionen im Wesentlichen unabhängig voneinander optimiert werden können.

Der Wickeldorn kann so ausgebildet sein, dass die Folie zumindest im Bereich des Folienanfangs am Wickeldorn haftet und die Folie exakt um den Dorn gewickelt werden kann. Zum Erzielen dieser Haftung wird das Innere des Wickeldornes vorzugsweise mit einer Unterdruckvorrichtung verbunden, wobei feine Löcher durch den Mantel des Wickeldornes führen, so dass die Folie im Bereich der Löcher vom Unterdruck am Wickeldorn gehalten wird. Es versteht sich von selbst, dass die Folie auch aufgrund von elektrostatischen Haftungskräften, oder gegebenenfalls auch mechanisch am Wickeldorn gehalten werden kann.

Die Bearbeitungsstation zum Anbringen der Dekorfolie ist vorzugsweise mit einem Drehtisch ausgerüstet. Dabei ist jedem Dosenplatz ein Wickeldorn und zumindest eine Haltevorrichtung mit einer konkaven Innenfläche zugeordnet. Von einer Folienbahn wird ein Folienstück abgeschnitten und auf einen Wickeldorn aufgewickelt, wobei das Folienstück mit der Vorderkante und der Hinterkante etwas überlappend am Wickeldorn gehalten wird. Nach der Übergabe an eine konkave Innenfläche kann das Folienstück im Überlappungsbereich versiegelt und an einen Dosenkörper festgeschrumpft werden. Weil das Schrumpfen und das Versiegeln unter Wärmeeinwirkung erzielt wird, ist es zweckmässig, wenn die zum Siegeln benötigte Temperatur etwas unter der minimalen Temperatur für das Schrumpfen liegt. Bei der aufgetragenen Siegelschicht kann der Siegelvorgang bei einer Temperatur von ca. 130°C durchgeführt werden. Das Schrumpfen der aus dem Stande der Technik bekannten Folie ROSO LR 400 beginnt aber erst bei Temperaturen von mindestens 140°C.

Um zu verhindern, dass sich die Folie am Dosenkörper verschiebt, wird an der Bearbeitungsstation zum Anbringen der Dekorfolie zumindest eine Schrumpfeinheit vorgesehen, welche die Folie so erwärmt, dass sie zumindest in einem ringförmigen Teilbereich so eng am Dosenkörper anliegt, dass die Dose in weitere Bearbeitungsstationen bewegt werden kann, ohne dass sich die Folie relativ zum Dosenkörper verschiebt. In einer weiteren Bearbeitungsstation, vorzugsweise mit einem Drehtisch, wird die Folie im wesentlichen vollständig an den Dosenkörper geschrumpft. Dazu wird die Folie mit Strahlungswärme und/oder Kontaktwärme insbesondere mit Heissluft so erwärmt, dass sie den gewünschten Schrumpfungsprozess durchläuft.

Die Folie ROSO LR 400 mit einer Dicke von 20µm kann beispielsweise in Längsrichtung durch Schrumpfen zumindest um 18% verkürzt werden. Es hat sich nun gezeigt, dass die Folie auch an ein bereits verengtes Halsteil angeschrumpft werden kann. Wenn die Verengung aber zu gross ist, um die Folie durch Schrumpfen an die Verengung anzulegen, so ist es gegebenenfalls zweckmässiger die gesamte Verengung, vorzugsweise aber zumindest einen Teil der Verengung, erst nach dem Anschrumpfen der geschlossenen Folie durchzuführen. Um für einen Verengungsschritt zu gewährleisten, dass die Folie fest mit dem Dosenmantel verbunden ist, muss nach dem Schrumpfvorgang noch ein Siegelvorgang durchgeführt werden, bei dem die Folie zumindest im zu verengenden Bereich fest mit dem Dosenkörper verbunden wird.

Bei einer Getränkedose kann nach dem Schrumpfvorgang die Haftung der Folie am Dosenkörper bereits genügen, wobei dann die Folie nach dem Aufschneiden von der Dose abgenommen werden kann. Bei Aerosoldosen sind die Anforderungen an das Haften der Folie grösser. Die Folie muss auch nach einer Beschädigung bzw. einem Aufschneiden am Dosenkörper haften bleiben. Dazu wird vorzugsweise nach dem Schrumpfen noch ein Siegelvorgang durchgeführt, bei dem die Folie zumindest in einem Teilbereich, vorzugsweise aber am gesamten Mantelbereich, des Dosenkörpers fest mit dem Dosenkörper verbunden wird. Die zum Festsiegeln nötige Siegelschicht ist auf der dem Dosenkörper zugewandten Seite der Folie angeordnet. Die zum Versiegeln benötigte Wärme gelangt vorzugsweise durch die Folie zur Siegelschicht. Gegebenenfalls aber wird die Wärme induktiv auf den Dosenkörper übertragen. Es könnten aber auch Pressflächen zum Übertragen von Kontaktwärme und Anpresskräften eingesetzt werden.

Wenn eine Siegelschicht verwendet wird, die nicht an einer Metalloberfläche festgesiegelt werden kann, so ist es zweckmässig wenn der Dosenkörper aus einem mit Kunststoff beschichteten Blech gebildet ist. Es hat sich gezeigt, dass die Kunststoffbeschichtung eines Dosenkörpers aus beschichtetem Blech äusserst gut mit einer Siegelschicht der Folie verbunden werden kann.

Wenn eine Verformung des offenen Dosenendes durchzuführen ist, wird zumindest eine weitere Bearbeitungsstation vorgesehen, die vorzugsweise einen Drehtisch umfasst, dem mitdrehende Necking-, insbesondere Spin-Flow-Necking-, Einrichtungen zugeordnet sind. Dabei kann die Bearbeitung während der Drehbewegung des Drehtisches durchgeführt werden. Weil bei den Spin-Flow-Necking-Einrichtungen das Bearbeitungswerkzeug und der Dosenkörper um die Dosenachse relativ zueinander gedreht werden, muss nun entweder der Dosenkörper oder das Bearbeitungswerkzeug relativ zum Drehtisch um die Dosenachse in Drehbewegung versetzbar sein. Um ein Umbördeln der freien Stirnseite des verengten Halsteiles zu ermöglichen, wird vorzugsweise eine Randumroll-Vorrichtung vorgesehen. Diese ist etwa den Dosenplätzen eines Drehtisches der Bearbeitungsstation zum Verformen des offenen Dosenendes zugeordnet. Es versteht sich von selbst, dass anstelle der Verformung zu einem Ventilsitz einer Aerosoldose, auch ein Dosenabschluss zum Aufbördeln oder Festschweissen eines Domes mit einem Ventilsitz oder eines Getränkedosendeckels ausgebildet werden kann. Um die obere Berandung der Dekorfolie und/oder Verbindungen zum Dosenabschluss abzudecken kann ein oberes ringförmiges Abdeckelement vorgesehen werden. Dieses obere Abdeckelement wird bei Aerosoldosen gegebenenfalls von einem Teilbereich des Ventils, bzw. von einem am Ventilsitz befestigten Teil, gebildet. Es versteht sich von selbst, dass es auch analog zur Bodenabdeckung über eine Siegelverbindung, eine Einrastverbindung oder eine Schweissverbindung, insbesondere mit zumindest drei Laser-Schweisspunkten, am oberen Dosenende festgesetzt werden kann, wobei dieses Teil das obere Folienende überdeckt und damit vor dem Abreissen schützt.

Die Zeichnungen erläutern die erfindungsgemässe Lösung anhand eines Ausführungsbeispieles. Dabei zeigt
- Fig. 1: eine schematische Darstellung einer Vorrichtung, welche ein Folienstück von einem Wickeldorn über eine Halteeinrichtung an einen Dosenkörper überträgt,
- Fig. 2: einen horizontalen Schnitt durch einen Wickeldorn und eine Halteeinrichtung,
- Fig. 3: eine perspektivische Darstellung eines Ausschnittes des Wickeldornes mit einer Pressfläche,
- Fig. 4: einen Schnitt durch einen Wandausschnitt eines Dosenkörpers mit einer daran anliegenden Dekorfolie,
- Fig. 5: eine perspektivische Darstellung einer Trennvorrichtung zum Auftrennen einer breiten Folienbahn in mehrere Teilbahnen,
- Fig. 6: einen vertikalen Schnitt durch eine Anlage, welche im Inneren eines Dosenkörpers eine Trennfolie anordnet, und
- Fig. 7: eine schematische Darstellung einer Druckvorrichtung zum Bedrucken einer Folienbahn.

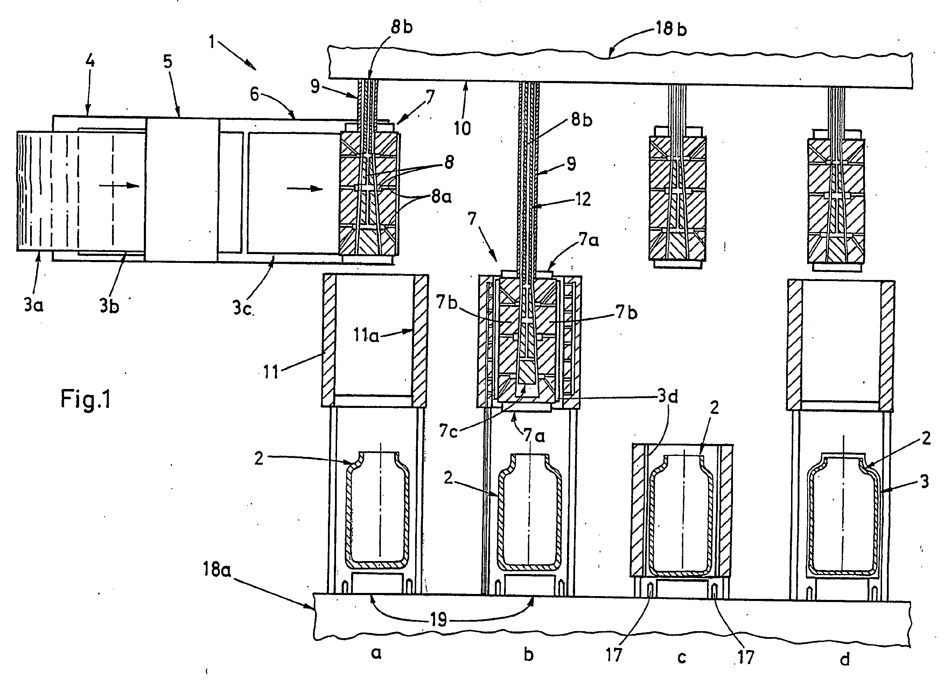

FIG. 1 zeigt eine Vorrichtung 1 zum Anbringen einer Dekorfolie 3 auf einem Dosenkörper 2. Eine Zuführvorrichtung 4 trägt eine Folienrolle 3a und führt das freie Ende der auf der Folienrolle aufgewickelten Folienbahn 3b einer Schneidvorrichtung 5 zu, welche von der Folienbahn 3b Folienstücke 3c abtrennt. Gemäss Situation a werden die Folienstücke 3c einem Wickeldorn 7 zugeführt, was beispielsweise von der Schneidvorrichtung 5 oder einer Weiterführvorrichtung 6 gewährleistet wird. Die Vorderkante eines Folienstückes 3c wird am Wickeldorn 7 positioniert und durch Drehen des Wickeldornes 7 um dessen Längsachse auf den Wickeldorn 7 aufgewickelt, so dass sich zwischen der Vorder- und der Hinterkante des Folienstückes ein Überlappungsbereich ausbildet, in dem zwei Folienlagen am Wickeldorn anliegen. Damit das Folienstück 3c am Wickeldorn 7 hält, umfasst der Wickeldorn 7 vorzugsweise einen Hohlraum 8, an den relativ zum Umgebungsdruck Unter- und gegebenenfalls auch Überdruck anlegbar ist, und Verbindungskanäle 8a, die den Hohlraum 8 mit der Aussenfläche des Wickeldornes 7 verbinden. Über die Verbindungskanäle 8a kann sich der Unterdruck zwischen dem Wickeldorn 7 und dem Folienstück 3c ausbilden und die gewünschte Haftung gewährleisten. Es versteht,sich von selbst, dass die Folie auch aufgrund von elektrostatischen Haftungskräften, oder gegebenenfalls auch mechanisch am Wickeldorn gehalten werden kann.

In der dargestellten Ausführungsform ist der Wickeldorn 7 über ein drehbares Halterohr 9 an einem ersten Anlageteil 10 angeordnet. Im Innern des Halterohres 9 ist eine Verbindungsleitung 8b vom Hohlraum 8 zu einer Vorrichtung zum Erzielen eines Unter- bzw. Überdruckes ausgebildet. Um den Wickeldorn 7 mitsamt eines aufgewickelten Folienstückes an eine konkave Innenfläche 11a einer Haltevorrichtung 11 übertragen zu können, ist das Halterohr 9 entlang seiner Längsachse verschiebbar angeordnet. Eine Haltevorrichtung 11 mit einer konkaven Innenfläche 11 a ist dem Wickeldorn 7 so zugeordnet, dass der Wickeldorn 7 durch eine Bewegung entlang seiner Achse in die konkave Innenfläche 11 a eingeführt (Situation b) und wieder heraus gezogen werden kann. Es versteht sich von selbst, dass auch lediglich die konkave Innenfläche 11a entlang dieser Achse bewegbar sein könnte. Nach dem Aufwickeln des Folienstückes auf den Wickeldorn 7 würde dann die konkave Innenfläche 11a über den Wickeldorn gestossen würde.

Die aneinander anliegenden Folienbereiche der Vorderkante und der Hinterkante werden nun in ihrem Überlappungsbereich an der konkaven Innenfläche 11 a miteinander versiegelt. Dazu wird eine konvexe Pressfläche nach aussen gegen die konkave Innenfläche gepresst, so dass im Überlappungsbereich ein Siegeldruck und eine Siegeltemperatur erzielt werden. Die zum Versiegeln des Überlappungsbereiches benötigte Wärme wird vorzugsweise von der konkaven Innenfläche, insbesondere von einer Teilfläche der konkaven Innenfläche, zugeführt. In der dargestellten Ausführungsform umfasst der Wickeldorn an beiden Stirnseiten Führungsteile 7a, von denen zumindest das obere mit dem Halterohr 9 verbunden ist. An den Führungsteilen 7a sind mindestens zwei Dornsegmente 7b gehalten, wobei eines dieser Dornsegmente die konvexe Pressfläche umfasst und radial nach aussen bewegbar und wieder rückstellbar ist. Gegebenenfalls sind alle Dornsegmente 7b radial bewegbar und dazu an den Führungsteilen 7a geführt. Um mindestens eines der Dornsegmente nach aussen pressen zu können, ist beispielsweise ein Betätigungskonus 7c im Innern der Dornsegmente 7b angeordnet, wobei der Betätigungskonus 7c und die zu betätigenden Dornsegmente 7b je einander zugewandte, zur Dornachse geneigte Flächen, insbesondere Konusteilflächen, aufweisen. Wenn nun der Betätigungskonus 7c von einem Betätigungselement 12, vorzugsweise einem Rohr mit der Verbindungsleitung 8b, nach oben gezogen wird, führt das Zusammenwirken der geneigten Flächen zu einer Bewegung der bewegbaren Dornsegmente 7b radial nach aussen. Eine Rückstelleinrichtung der Führungsteile 7a gewährleistet bei einer Bewegung des Betätigungskonus 7c nach unten eine radiale Bewegung der Dornsegmente 7b nach innen.

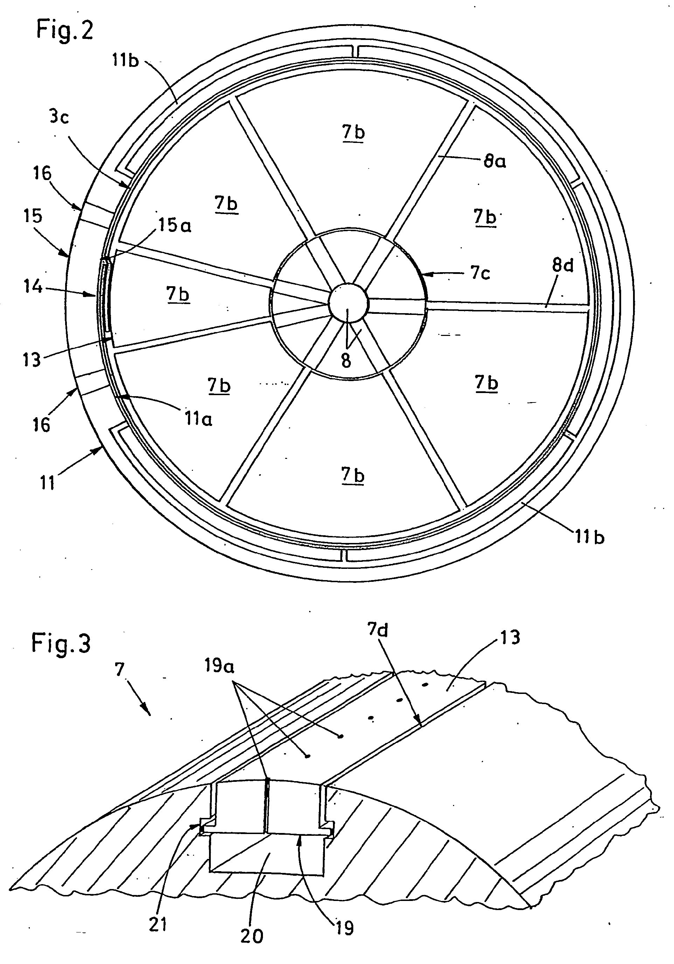

Fig. 2 zeigt eine Ausführungsform, bei der sieben Dornsegmente 7b radial bewegbar sind. Nachdem der Wickeldorn 7 mit dem Folienstück 3c in die Haltevorrichtung 11 eingeführt ist, können die Dornsegmente 7b mit dem Folienstück 3c nach aussen gegen die konkave Innenfläche 11a bewegt werden. Aufgrund der Umfangserhöhung wird der Abstand zwischen Vorder- und Hinterkante des Folienstückes 3c, also der Überlappungsbereich etwas kleiner, wobei die kleine Verschiebung zu einer Verbesserung des exakten Anliegens im Überlappungsbereich führt. An einem der Dornsegmente 7b ist die konvexe Pressfläche 13 ausgebildet. Das Folienstück 3c ist so positioniert, dass der Überlappungsbereich 14 der Pressfläche 13 zugeordnet ist. Die von der Pressfläche 13 auf den Überlappungsbereich 14 wirkende Presskraft wird beim Pressen durch eine Abstützung über mindestens ein Dornsegment 7b an die konkave Innenfläche 11a abgeleitet. Die konvexe Pressfläche ist vorzugsweise breiter als der Überlappungsbereich und/oder nachgiebig und/oder besteht aus einem Material, das mit der Siegelschicht nicht in Haftverbindung treten kann. Pressabdrücke im Folienstück 3c können so verhindert werden. Die zum Versiegeln des Überlappungsbereiches 14 benötigte Wärme wird von einer heizbaren Siegelfläche 15a an der konkaven Innenfläche 11a zugeführt. Die Siegelfläche 15a ist die Innenfläche eines Siegelsegmentes 15, an welches in Umfangsrichtung gegebenenfalls beidseits je ein Isolationsbereich 16 anschliesst.

Nach dem Versiegeln des Überlappungsbereiches 14 wird das Folienstück 3c als geschlossenes Folienstück 3d bezeichnet. Das geschlossene Folienstück 3d wird nun vom Wickeldorn 7 an die Haltevorrichtung 11 übergeben. Dazu muss die Haltekraft am Wickeldorn 7 wegfallen, was in der dargestellten Ausführungsform durch das Abbauen des Unterdruckes im Hohlraum 8. Die zur Aussenfläche des Wickeldornes 7 führenden Verbindungskanäle 8a werden gemäss Fig. 2 von den Zwischenräumen zwischen den Dornsegmenten 7b gebildet. Gemäss Fig. 1 können aber auch Bohrungen vorgesehen werden. Zum Halten des geschlossenen Folienstückes 3d an der Haltevorrichtung 11, umfasst diese beispielsweise Luftkanäle 11b mit Öffnungen an der konkaven Innenfläche 11a. Mit einem Unterdruck in den Luftkanälen 11b wird das geschlossene Folienstück 3d an der konkaven Innenfläche gehalten. Bei einer Bewegung des Betätigungselementes 12 nach unten führt die Rückstelleinrichtung der Führungsteile 7a zu einer Bewegung der Dornsegmente 7b radial nach innen.

Gemäss Fig. 1, Situation c, wird nun der Wickedorn 7 aus der Haltevorrichtung 11 heraus in die obere Position und die Haltevorrichtung 11 mit dem geschlossenen Folienstück 3d über den Dosenkörper 2 bewegt. Durch das Zuführen von Wärme, beispielsweise über Heissluftdüsen 17 kann am unteren Rand des geschlossenen Folienstückes 3d die Schrumpftemperatur überschritten werden, so dass sich zumindest der untere Endbereich des Folienstückes 3d an den Dosenkörper 2 anlegt. Nach dem Abbau des Unterdruckes in den Luftkanälen 11 b wird die Haltevorrichtung 11 vom Dosenkörper 2 weg nach oben bewegt (Situation d). Weil das Folienstück 3d nun in der gewünschten Position am Dosenkörper 2 haftet, kann der Dosenkörper 2 mitsamt dem Folienstück 3d einer weiteren Behandlungsstation, beispielsweise einem Ofen, zugeführt werden, wo der Schrumpfprozess vollständig abgeschlossen und gegebenenfalls auch ein Festsiegeln der Dekorfolie am Dosenkörper durchgeführt wird. Die weiteren Behandlungsstation zum Durchführen des Schrumpfvorganges führt dem übertragenen Folienstück Wärme zu, wobei die Wärme vorzugsweise in der Form von Strahlungswärme und/oder Kontaktwärme, insbesondere mittels Heissluft, gegebenenfalls aber auch induktiv über den Dosenkörper, zugeführt wird.

Zum Durchführen eines Verbindungsvorganges, mit dem die Dekorfolie zumindest in einem Teilbereich flächig am Dosenkörper festgesiegelt wird, ist gegebenenfalls eine Verbindungsvorrichtung vorgesehen. Eine solche Verbindungsvorrichtung überträgt Wärme an das am Dosenkörper anliegende Folienstück, so dass dessen Siegelschicht eine Siegelverbindung zum Dosenkörper ausbildet. Gegebenenfalls wird die Dekorfolie mit einer Anpressfläche gegen den-Dosenkörper gepresst, wobei die Anpressfläche gegebenenfalls zum Ausstreichen möglicher Falten über den Dosenkörper bewegt wird. Die Wärme wird vorzugsweise induktiv über den Dosenkörper (), gegebenenfalls aber in der Form von Strahlungswärme und/oder Kontaktwärme, zugeführt. Gegebenenfalls wird für das Festschrumpfen und das Festsiegeln die gleiche Vorrichtung verwendet, wobei für die beiden Vorgänge lediglich unterschiedliche Behandlungstemperaturen vorgesehen werden.

Die Vorrichtung zum Anbringen einer Dekorfolie ist vorzugsweise als Drehstation aufgebaut. Dabei ist jedem Dosenplatz ein Wickeldorn 7 und eine Haltevorrichtung- 11 zugeordnet, welche Teile vorzugsweise über den zu bearbeitenden Dosen angeordnet sind. Die Drehstation umfasst beispielsweise einen oberen Drehteil 18b, an dem die Wickeldorne 7 gehalten sind, und einen unteren Drehteil 18a mit Dosenplätzen 19, den Heissluftdüsen 17 und den Haltevorrichtungen 11. Die Dosenkörper werden mittels Übergabestationen auf die Dosenplätze gestellt und am Schluss wieder entnommen.

Fig. 3 zeigt einen Wickeldorn 7, der anstelle der Dornsegmente 7b lediglich ein Presselement 19 mit der Pressfläche 13 umfasst. In der dargestellten Ausführungsform wird das Presselement 19 über eine Führungs- und Anschlagvorrichtung 21 und einen Betätigungskanal 20 mittels Druckluft geführt bzw. betätigt. Eine erste nach innen gezogenen Lage des Presselementes 19 wird mittels Unterdruck im Betätigungskanal 20 erzielt. Eine zweite nach aussen gepresste Lage des Presselementes 19 wird mittels Überdruck im Betätigungskanal 20 erzielt. Weil nun das Folienstück in der ersten Lage des Presselementes 16 am Wickeldorn 7 gehalten werden muss, kann mit Verbindungsbohrungen 19a ein Unterdruck und damit eine Haftung zwischen dem Folienstück und der Pressfläche 13 erzielt werden. An einer Anschlagskante 7d des Wickeldornes 7 kann beispielsweise die Vorderkante des Folienstückes ausgerichtet werden, so dass der Überlappungsbereich in den Bereich der Pressfläche 13 zu liegen kommt. In der zweiten Lage des Presselementes 19 wird das Folienstück gegen die konkave Innenfläche gepresst und muss nicht mehr am Wickeldorn 7 gehalten werden. Das Freigeben der Folie wird durch Luft erzielt, die aufgrund des Überdruckes im Betätigungskanal 20 durch die Verbindungsbohrungen 19a austritt.

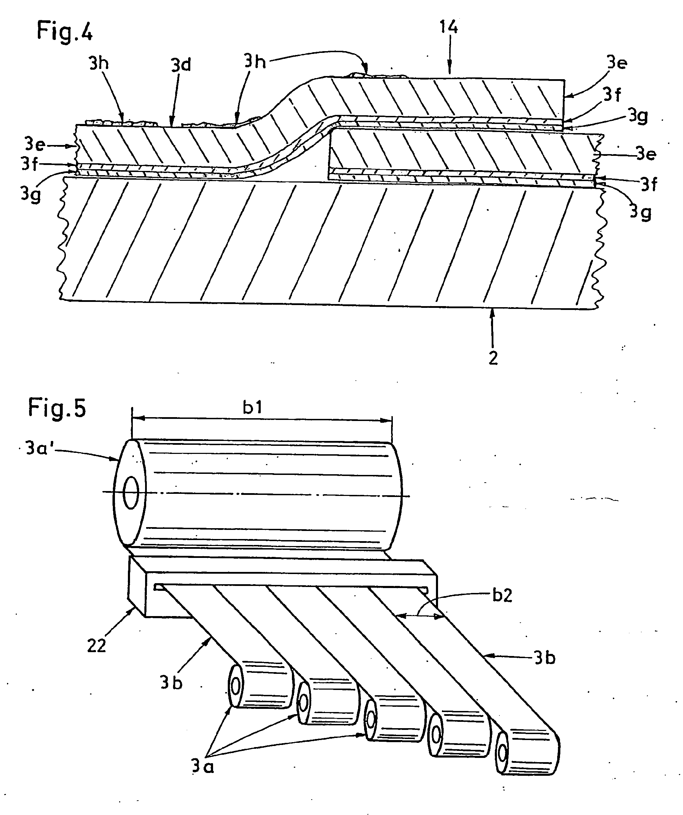

Fig. 4 zeigt einen Ausschnitt aus einem Dosenkörper 2 mit einem daran anliegenden Überlappungsbereich 14. Das geschlossene Folienstück 3d umfasst eine transparente Folie 3e mit einer Druckschicht 3f und einer auf der Druckschicht angeordneten Siegelschicht. Die Druckschicht umfasst in der Form eines Konterdruckes vorzugsweise mindestens eine erste Drucklage und gegebenenfalls an der von der Folie abgewandten Seite, direkt bei der Siegelschicht eine Grundierung bzw. Deckfarbe. Vorzugsweise werden drei, insbesondere aber vier, Drucklagen mit verschiedenen Farben vorgesehen. Bei der Verwendung eines Konterdruckes ist die Druckschicht durch die Folie geschützt. Es versteht sich von selbst, dass auch Folien verwendet werden können, die auf ihrer nach aussen gewandten Seite im Normaldruck bedruckt sind, wobei dann gegebenenfalls zuerst eine Deckfarbe und nach den gewünschten Drucklagen vorzugsweise eine Schutzlackschicht aufgetragen wird. Die Siegelschicht wird dann auf der Druckschicht abgewandten Seite der Folie aufgebracht. Nach dem Aufwickeln der Folienstücke liegt die Siegelschicht jeweils am Dosenkörper 2 an. Im Überlappungsbereich 14 liegt die Siegelschicht des aussen liegenden Folienendes am innen liegenden Folienende an. Daher ist es beim Ausbilden der Verbindung im Überlappungsbereich 14 zweckmässig, wenn die Wärme von der konkaven Innenfläche 11 a her zugeführt wird. Die Wärme gelangt dann zuerst zur Siegelschicht 3g, welche die Verbindung erzielt. Die an der Pressfläche 13 anliegende Siegelschicht 3g wird weniger stark erwärmt.

Bei der Verwendung von Folienbahnen, die auf der Rückseite zumindest mit einer Deckfarbe bzw. Grundierung bedruckt sind (Konterdruck), besteht die Möglichkeit, auf der Aussenseite mindestens eine weitere Drucklage, gegebenenfalls aber eine Druckschicht mit mehr als einer Farbe, aufzubringen. Die aussen aufgebrachte Druckschicht 3h kann mit einem beliebigen bekannten Druckverfahren, beispielsweise mittels Flexodruck, Siebdruck, Tiefdruck, Heissprägung oder Digitaldruck aufgebracht werden. Bei der Verwendung eines Transferdruckverfahrens kann ein Verfahren eingesetzt werden bei dem nass in nass die gewünschten Farben übereinander auf eine Transferfläche gebracht werden. Von der Transferfläche gelangt der gesamte Druck in einem Schritt auf die Folie. Dadurch kann auf das mehrmalige Trocknen von nacheinander aufgebrachten Teildrucken verzichtet werden.

Fig. 5 zeigt eine breite Folienrolle 3a', die mittels einer Schneidvorrichtung 22 in mehrere Folienbahnen 3b aufgeteilt wird, wobei die Folienbahnen 3b auf Folienrollen 3a aufgewickelt werden. Die breite Folienrolle 3a' hat eine Breite b1, die mehreren Dosenhöhen entspricht. Die Folienbahnen 3a haben jeweils eine Breite b2, die der Dosenhöhe entspricht. Wenn nun die breite Folienrolle 3a' im Konterdruck mit einem Standarddekor bedruckt ist, so können die schmalen Folienrollen 3a für verschiedene Länder auf der Aussenseite je mit den lokal benötigten Informationen bedruckt werden. Diese spezifische Bedruckung kann nach Bedarf und insbesondere auch an verschiedenen Orten, vorzugsweise in der Nähe der jeweiligen Dosenhersteller, durchgeführt werden.

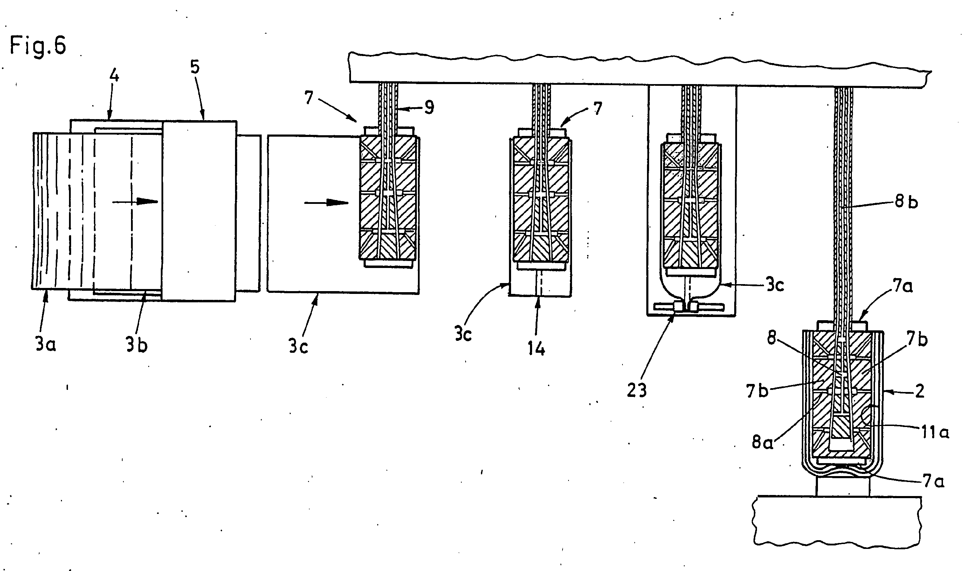

Fig. 6 zeigt eine eine Lösung zum Übergeben des gewickelten Folienstückes vom Wickeldorn an eine konkave Innenfläche und das anschliessende Ausbilden einer Siegelverbindung, wobei die konkave Innenfläche von der Innenwand eines Dosenkörpers gebildet wird und das Folienstück zum Bereitstellen einer Dosen-Innenschicht eingesetzt wird. Dabei wird am Wickeldorn 7 ein Folienstück 3c aufgewickelt. Um auch gegen den Dosenboden hin einen von der Folie gebildeten Abschluss zu erzielen, wird beispielsweise das aufgewickelte Folienstück 3c unten über die Stirnseite vorstehen gelassen und mittels einer Schliessvorrichtung 23 mittels Verschrumpfen oder Verdrehen verschlossen. Der Überlappungsbereich 14 soll aber im Bereich des Wickeldornes 7 weiterhin verstellbar bleiben. Anschliessend wird der Wickeldorn 7 mit dem unten abgeschlossenen Folienstück 3c in einen Dosenkörper 2 eingeführt, wobei der untere Abschluss aufgrund von Rümpfen nicht eng an den Dosenboden angelegt werden kann.

Indem Dornsegmente 7b, wie bereits anhand der Figuren 1 und 2 beschrieben, radial nach aussen bewegt werden und/oder durch das Zuführen von Druckluft zwischen den Wickeldorn 7 und das Folienstück 3c, kann das Folienstück 3c zumindest bereichsweise gegen die konkave Innenfläche 11a des Dosenkörpers 2 gebracht werden. Die Länge des Folienstückes 3c in Umfangsrichtung wird so gewählt, dass das an der Dosenwand anliegende Folienstück 3c weiterhin einen Überlappungsbereich 14 aufweist. Wenn nun gegebenenfalls durch die Wand des Dosenkörpers 2 hindurch der Folie Wärme zugeführt wird und die Folie auf einer Seite eine Siegelschicht aufweist, so kann beispielsweise zumindest im Überlappungsbereich eine Siegelverbindung zwischen den beiden Folienlagen erzielt werden. Vorzugsweise wird vom Wickeldorn 7 aus, wie in Fig. 2 dargestellt, mit der konvexen Pressfläche 13 gegen den Überlappungsbereich 14 gedrückt. An die Stelle der in Fig. 2 dargestellten Haltevorrichtung tritt der Dosenkörper 2. Um die Folie möglichst weitgehend an der Wand des Dosenkörpers fest zu siegeln, wird die Folie mittels eines Überdruckes und/oder mittels mehrerer Dornsegmente 7b an die Doseninnenwand gedrückt und im wesentlichen über die gesamte Mantelwand oder gegebenenfalls auch vom Doseninnern her Wärme zugeführt.

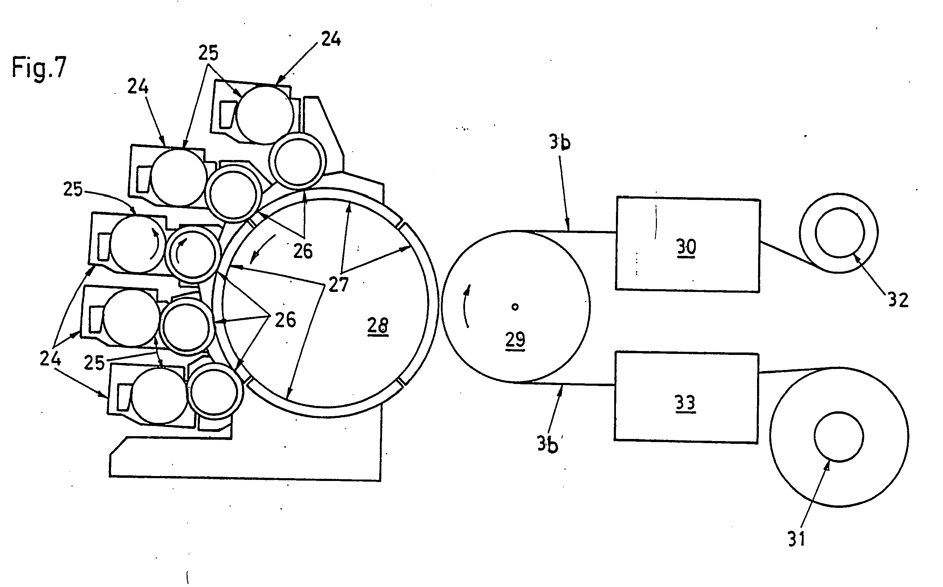

Fig. 7 zeigt eine Lösung bei der ein Druckschritt mit einem Transferverfahren durchgeführt wird. Dabei gelangt zumindest eine, vorzugsweise aber gelangen verschiedene Farben von Benetzungsbehältern 24 mittels gerasterter Walzen 25,auf Druckformen 26 bzw. Trommeln und von diesen auf Übertragungsflächen 27 bzw. Gummitücher. Von den Übertragungsflächen gelangen die nass in nass aufgetragenen Farben in einem Schritt auf die Folienbahn 3b. Die Übertragungsflächen 27 sind auf der Mantelfläche einer Trägertrommel 28 angeordnet und die Folienbahn 3b wird von einer Anpresstrommel 29 mit den Übertragungsflächen 27 in Kontakt gebracht.

Wenn nun die verschiedenen Teildrucke nass in nass auf eine Transferfläche, beispielsweise auf ein Gummituch oder einen Transferzylinder, aufgetragen werden, so kann das gesamte Druckbild in einem Schritt und ohne Übereinstimmungs-Problem auf die Folie übertragen werden. Es braucht lediglich ein Übertragungswerk und eine Trocknungsvorrichtung 30. Die Trocknungsvorrichtung 30 kann gegebenenfalls auch eine Schutzlack-Auftragsvorrichtung umfassen. Die Folienbahn 3b wird von einer ersten Rolle 31 auf eine zweite Rolle 32 umgewickelt. Gegebenenfalls ist eine Vorbehandlungs-Vorrichtung 33 vorgesehen, bei der beispielsweise die Folienrückseite mit einer Grundierung und/oder einer Siegelschicht versehen wird.

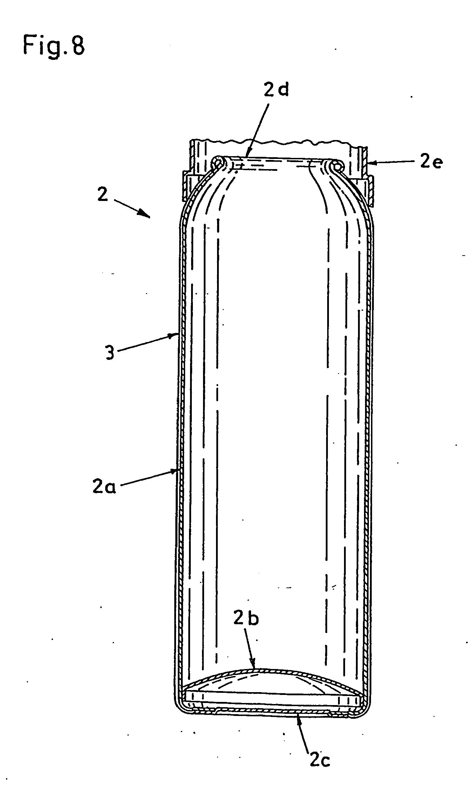

Fig. 8 zeigt den Dosenkörper 2 einer Aerosoldose, wobei der Dosenkörper 2 aus einem Mantelteil 2a und einem Bodenteil 2b zusammengestellt ist. Es versteht sich von selbst, dass der Dosenkörper 2 auch einteilig ausgebildet sein kann. Die Sicht auf die Verbindung zwischen dem Bodenteil 2b und dem Mantelteil 2a wird von einer Bodenabdeckung 2c abgedeckt. Am oberen Ende des Dosenkörpers 2 ist mittels stauchender Verengung und Umformung bei der Öffnung ein Ventilsitz 2d ausgebildet. Der Mantelteil 2a ist gemäss dem oben beschriebenen Verfahren mit einer Dekorfolie 3 versehen. Die Dekorfolie 3 wird beispielsweise nach der Verengung des oberen Dosenendes aufgeschrumpft und erstreckt sich insbesondere im Wesentlichen bis zur Endkante des Mantelteiles 2a, so dass das Folienende nach dem Umformen bei der Öffnung im umgeformten Dosenrand festgeklemmt ist.

Wenn sich die Dekorfolie 3 nicht bis zum oberen Dosenrand erstreckt, so kann am oberen Dosenende ein oberer Abdeckteil 2e angeordnet werden, der den oberen Endbereich der Dekorfolie 3 abdeckt. Wenn der Dosenkörper 2 aus drei Teilen gebildet wird, so muss am Mantelteil 2a ein oberer Abschlussteil mit dem Ventilsitz festgesetzt werden. Gemäss dem Stande der Technik wird dies mit einer Falznaht oder gegebenenfalls mittels Schweissen (EP 208 564 B1) gemacht. Der dabei entstehende unattraktive Nahtbereich zwischen dem oberen Abschlussteil und dem Mantelteil 2a kann vom oberen Abdeckteil 2e überdeckt werden. Im Falle einer Aerosoldose handelt es sich beim oberen Abdeckteil 2e um ein mit dem Ventil verbundenes Teil, das nach dem Einsetzen des Ventils immer auf der Dose sitzt. Durch das Vorsehen von Abdeckteilen 2c, 2e können dreiteilige Dosen bereitgestellt werden, bei denen für den Verbraucher nicht erkennbar ist, dass der Dosenkörper 2 aus verschiedenen Teilen zusammengesetzt ist. Grundsätzlich sind alle bekannten Verbindungsarten zum dichten Verbinden von Dosenteilen einsetzbar.

In der Ausführungsform gemäss Fig. 8 ist der Bodenteil 2b mit einer ringförmigen Schweissverbindung mit dem Mantelteil 2a verbunden. Beim Boden erstreckt sich ein Randbereich des Bodenteiles 2b an den Mantelteil 2a anliegend gegen den unteren Rand des Mantelteiles 2a hin. Die Schweissverbindung kann kehlförmig oder auch im Kontaktbereich dieser beiden Teile ausgebildet sein. Es versteht sich von selbst, dass die Teile auch gestossen miteinander verschweisst werden können, dass zumindest eine der beiden Verbindungen als Falzverbindung ausgebildet sein' könnte oder, dass nur unten bzw. nur oben eine Verbindung vorgesehen ist. Ohne die Verwendung eines oberen Abschlussteiles muss der Mantelteil 2a zur Bildung des Ventilsitzes stark verengt werden, was bei verschiedenen Materialien mit grossem Aufwand, insbesondere mit vielen stauchenden Einziehschritten, und gegebenenfalls unüberwindbaren Problemen verbunden ist. Aufgrund der Abdeckmöglichkeit kann eine optimierte Zusammenstellung des Dosenkörpers gewählt werden, ohne dass sich dies im Erscheinungsbild negativ zeigt.

Die Bodenabdeckung 2c und gegebenenfalls auch der obere Abdeckteil 2e kann zum Schützen oder Festklemmen des unteren bzw. des oberen Folienrandes der Dekorfolie 3 eingesetzt werden. Dadurch kann die Gefahr des Ablösens einer Dekorfolie 3 wesentlich reduziert werden. Mit einer Dekorfolie 3 können auch Schweissnähte in Dosen-Längsrichtung überdeckt werden. Ein Dosenmantel, der durch das Biegen und Zusammenschweissen, insbesondere Laserschweissen, gebildet wird, kann bereits durch den Zuschnitt der zusammengestellten Teile eine spezielle Form erhalten. Weil das Material des mindestens einen zum Mantel geformten metallischen Flachmaterials nicht durch Umformschritte gehärtet ist, kann der Mantel zumindest bereichsweise unter Änderung des Umfangs umgeformt werden. Dadurch können ästhetisch attraktive Dosen geförmt werden, die vor oder gegebenenfalls auch nach dem Umformen mit einer schrumpfenden Dekorfolie 3 versehen werden können. Wenn zwischen dem Mantelteil 2a und der Dekorfolie 3 Strukturelemente angeordnet werden, so können Dosen mit speziellen Effekten bereitgestellt werden. Es ergeben sich somit viele neue Gestaltungsmöglichkeiten.

## Patentansprüche

1. Verfahren zum Herstellen eines Dosenkörpers (2), bei welchem Verfahren von einer Folienbahn (3b) ein Folienstück (3c) abgeschnitten und das Folienstück (3c) von dessen Vorderkante zu dessen Hinterkante auf einen Wickeldorn (7) aufgewickelt und etwas überlappend am Wickeldorn (7) gehalten wird, **dadurch gekennzeichnet, dass** das Folienstück (3c) vom Wickeldorn (7) an eine konkave Innenfläche (11a) übertragen und die aneinander anliegenden Folienbereiche der Vorderkante und der Hinterkante in ihrem Überlappungsbereich (14) an der konkaven Innenfläche (11 a) miteinander versiegelt werden.

2. Verfahren nach Anspruch 1, **dadurch gekennzeichnet, dass** die konkave Innenfläche (11a) an einer Haltevorrichtung (11) ausgebildet ist und anschliessend an das Versiegeln im Überlappungsbereich (14) das zylindermantelförmig geschlossene Folienstück (3d) von der konkaven Innenfläche (11a) auf einen Dosenkörper (2) gebracht und mittels mindestens eines Schrumpfvorganges zumindest teilweise an den Dosenkörper (2) angelegt wird.

3. Verfahren nach Anspruch 1 oder 2, **dadurch gekennzeichnet, dass** zum Versiegeln der aneinander anliegenden Folienbereiche in ihrem Überlappungsbereich (14) eine konvexe Pressfläche (13) nach aussen gegen die konkave Innenfläche (11a) gepresst wird und dabei im Überlappungsbereich (14) ein Siegeldruck und eine Siegeltemperatur erzielt werden, wobei die zum Versiegeln des Überlappungsbereiches (14) benötigte Wärme vorzugsweise von der konkaven Innenfläche (11a), insbesondere von einer Teilfläche (15a) der konkaven Innenfläche (11 a), zugeführt wird.

4. Verfahren nach Anspruch 3, **dadurch gekennzeichnet, dass** die konvexe Pressfläche (13) von einer Betätigungsvorrichtung betätigt wird, wobei beim Pressen eine Abstützung an der konkaven Innenfläche (11a) erzielbar ist und/oder die konvexe Pressfläche (13) breiter als der Überlappungsbereich (14) und/oder nachgiebig und/oder aus einem Material, das mit der Siegelschicht nicht in Haftverbindung treten kann, ausgebildet ist. ,

5. Verfahren nach einem der Ansprüche 2 bis 4, **dadurch gekennzeichnet, dass** nach dem Ausbilden der Siegelverbindung im Überlappungsbereich (14) der Wickeldorn (7) und das Halteteil (11) mit der geschlossenen Folienhülle (3d) und anschliessend der Dosenkörper (2) und das Halteteil (11) mit der geschlossenen Folienhülle (3d) in Achsrichtung relativ zueinander bewegt werden, so dass die Folienhülle (3d) um den Dosenkörper (2) angeordnet ist und mit einem ersten Schrumpfvorgang zumindest in einem Ringbereich mit dem Dosenkörper (2) in haltenden Kontakt gebracht und gegebenenfalls mit einem zweiten, vorzugsweise ausserhalb des Halteteiles (11) durchgeführten, Schrumpfvorgang vollständig an den Dosenkörper (2) angeschrumpft wird, wobei die Wärme für den mindestens einen Schrumpfvorgang vorzugsweise in der Form von Strahlungswärme und/oder Kontaktwärme, insbesondere mittels Heissluft, gegebenenfalls aber auch induktiv über den Dosenkörper (2), zugeführt wird.

6. Verfahren nach einem der Ansprüche 1 bis 5, **dadurch gekennzeichnet, dass** zum Durchführen eines Verbindungsvorganges zumindest einem Teilbereich des auf den Dosenkörper (2) übertragenen Folienstückes (3d) Wärme, und gegebenenfalls auch eine Anpresskraft, zugeführt wird, so dass eine Siegelverbindung zwischen zumindest einem Teilbereich des Folienstückes (3d) und dem Dosenkörper (2) erzielt wird, wobei die Wärme vorzugsweise induktiv über den Dosenkörper (2), gegebenenfalls aber in der Form von Strahlungswärme und/oder'Kontaktwärme, zugeführt wird.

7. Vorrichtung zum Anbringen einer Folienstückes (3c) auf einem Dosenkörper (2) mit zumindest einer Aufnahme zum Halten eines Dosenkörpers (19), einer Zuführvorrichtung (4-6) zum Zuführen von Folienstücken (3c), zumindest einem Wickeldorn (7) an dem Folienstücke (3c) unter Haftung so aufwickelbar sind, dass sie mit der Vorderkante und der Hinterkante etwas überlappend am Wickeldorn (7) gehalten sind und mit zumindest einer heizbaren Siegelvorrichtung (15), **dadurch gekennzeichnet, dass** eine Haltevorrichtung (11) mit einer konkaven Innenfläche (11a) so ausgebildet und relativ zum Wickeldorn (7) bewegbar ist, dass zumindest ein Teilbereich des Folienstückes (3c) mit der Vorderkante und der Hinterkante des Folienstückes (3c) vom Wickeldorn (7) an die konkave Innenfläche (11a) übertragbar ist, eine Pressfläche (13) die aneinander anliegenden Folienbereiche in einem Überlappungsbereich (14) zwischen der Vorderkante und der Hinterkante an die konkave Innenfläche (11a) pressbar macht, die Siegelvorrichtung (15) einen Siegelvorgang zum Verbinden des Überlappungsbereiches (15) auslösbar macht und die konkave Innenfläche (11a) relativ zum Dosenkörper (2) bewegbar ist, so dass das zylindermantelförmig geschlossene Folienstück (3d) dem Dosenkörper (2) zugeführt werden kann und mittels einer Schrumpfvorrichtung zumindest teilweise an den Dosenkörper (2) angelegbar ist.

8. Vorrichtung nach Anspruch 7, **dadurch gekennzeichnet, dass** die konvexe Pressfläche (13) mittels einer Betätigungsvorrichtung (7c) bewegbar ist, die vorzugsweise am Wickeldorn (7) angeordnet ist und insbesondere eine an der konkaven Innenfläche (11a) abstützbare Presskraft erzielbar macht, wobei die konvexe Pressfläche (13) insbesondere breiter als der Überlappungsbereich (14) und/oder nachgiebig und/oder aus einem Material, das mit der Siegelschicht nicht in Haftverbindung treten kann, ausgebildet ist.

9. Vorrichtung nach Anspruch 7 oder 8, **dadurch gekennzeichnet, dass** die Siegelvorrichtung (15) an der konkaven Innenfläche (11a) eine der konvexen Pressfläche (13) zugewandte heizbare Siegelfläche (15a) aufweist, an welche in Umfangsrichtung gegebenenfalls beidseits je ein Isolationsbereich (16) anschliesst.

10. Vorrichtung nach einem der Ansprüche 7 bis 9, **dadurch gekennzeichnet, dass** die Vorrichtung zumindest einen Drehstation (18a, 18b) umfasst, die auf einer Kreislinie in gleichen Abständen Aufnahmen (19) zum Halten von Dosenkörpern (2), jeder Aufnahme (19) zugeordnet einen Wickeldorn (7) und eine Haltevorrichtung (11) mit einer konkaven Innenfläche (11a) aufweist.

11. Vorrichtung nach einem der Ansprüche 7 bis 10, **dadurch gekennzeichnet, dass**, die mindestens eine Schrumpfvorrichtung zum Durchführen des Schrumpfvorganges zumindest einem Teilbereich des auf den Dosenkörper (2) übertragenen Folienstückes (3d) Wärme zuführbar macht, wobei die Wärme vorzugsweise in der Form von Strahlungswärme und/oder Kontaktwärme, insbesondere mittels Heissluft, gegebenenfalls aber auch induktiv über den Dosenkörper (2), zugeführt wird.

12. Vorrichtung nach einem der Ansprüche 7 bis 11, **dadurch gekennzeichnet, dass** eine Verbindungsvorrichtung zum Durchführen eines Verbindungsvorganges zumindest einem Teilbereich des auf den Dosenkörper (2) übertragenen Folienstückes (3d) Wärme, und gegebenenfalls auch eine Anpresskraft, zuführbar macht, so dass eine Siegelverbindung zwischen zumindest einem Teilbereich des Folienstückes (3d) und dem Dosenkörper (2) erzielt wird, wobei die Wärme vorzugsweise induktiv über den Dosenkörper (2), gegebenenfalls aber in der Form von Strahlungswärme und/oder Kontaktwärme, zugeführt wird.

13. Verfahren nach einem der Ansprüche 1 bis 6, **dadurch gekennzeichnet, dass** zum Bedrucken der Folienbahn (3b), deren Abschnitte an Gefässen angeordnet werden, mindestens ein Druckschritt im Transferverfahren durchgeführt wird bei dem zumindest eine, vorzugsweise mindestens zwei, insbesondere aber drei bis fünf, verschiedene Farben auf eine Übertragungsfläche (27) und von der Übertragungsfläche (27) in einem Schritt als Transferdruckschicht auf eine Seite der Folienbahn (3b) übertragen wird.

14. Verfahren nach Anspruch 13, **dadurch gekennzeichnet, dass** eine Seite der Folienbahn (3b) bereits vor dem Druckschritt im Transferverfahren mit einem Vordruck (3f) und/oder einer Siegelschicht (3g) versehen wird, vorzugsweise mittels eines Tiefdruckverfahrens, wobei die Transferdruckschicht (3h) und der Vordruck (3f) vorzugsweise auf verschiedenen Seiten der Folienbahn (3b) aufgetragen werden, der Vordruck (3f) eine Grundierung oder ein Grunddekor bildet und gegebenenfalls mit einer Siegelschicht (3g) überdeckt wird.

## Claims

1. A method for producing a can body (2), in which method a film piece (3c) is cut from a film web (3b), and said film piece (3c) is wound onto a winding mandrel (7) from its leading edge up to its trailing edge, and is retained on said winding mandrel (7) in somewhat overlapping manner, **characterised in that** said film piece (3c) is transferred from said winding mandrel (7) to a concave inner surface (11 a), and film areas, engaging each other, of said leading edge and said trailing edge are sealed together in their overlapping area (14) on said concave inner surface (11 a).

2. Method according to claim 1, **characterised in that** said concave inner surface (11 a) is formed on a holding device (11) and, subsequently to sealing in said overlapping area (14), the film piece (3d) closed in the shape of a cylinder shell is brought onto a can body (2) and is at least partially engaged to said can body (2) by at least one shrinking procedure.

3. Method according to claim 1 or 2, **characterised in that** for sealing the interengaging film areas in their overlapping areas (14), a convex pressing surface (13) is pressed outwardly against said concave inner surface (11a), thus generating a sealing pressure and a sealing temperature, wherein heat required for sealing said overlapping area (14) is preferably supplied from said concave inner surface (11 a), particularly from a partial area (15a) of said concave inner surface (11 a).

4. Method according to claim 3, **characterised in that** said convex pressing surface (13) is actuated by an actuation device, wherein an abutment is achieved on said concave inner surface (11a) during pressing and/or said convex pressing surface (13) is formed broader than said overlapping area (14) and/or is resilient and/or is formed from a material that is unable to be brought into an adhering connection with the sealing layer.

5. Method according to any of claims 2 to 4, **characterised in that** after forming the sealing connection in said overlapping area (14), said winding mandrel (7) and said holding part (11) together with said closed film shell (3d), and subsequently said can body (2) and said holding part (11) together with said closed film shell (3d) are moved in axial direction relative to each other, so that said film shell (3d) is arranged around said can body (2) and, at least in an annular area, is brought into holding contact with said can body (2) by a first shrinking procedure, and is optionally completely shrunk onto said can body (2) by a second shrinking procedure, preferably being effected outside said holding part (11), wherein heat for the at least one shrinking procedure is preferably supplied in the form of radiant heat and/or contact heat, in particular by means of hot air, but in some cases by induction via said can body (2).

6. Method according to any of claims 1 to 5, **characterised in that** for carrying out a connection procedure, at least a partial area of the film piece (3d) transferred onto said can body (2) is supplied with heat, and optionally a pressing force, so that a sealing connection between at least a partial area of the film piece (3d) and said can body (2) is achieved, wherein heat is preferably supplied by induction via said can body (2), but optionally in the form of radiant heat and/or contact heat.

7. Device for applying a film piece (3c) to a can body (2), comprising at least one reception means for holding a can body (19), a supply device (4-6) for supplying film pieces (3c), at least one winding mandrel (7) onto which adhering film pieces (3c) may be wound in such a manner that their leading edges and their trailing edges are held somewhat in an overlapping manner on said winding mandrel (7), and at least one sealing device (15) capable to be heated, **characterised in that** a holding device (11) is formed with a concave inner surface (11a) and is movable relative to said winding mandrel (7) in such a manner that at least a partial area of the film piece (3c) with its leading edge and its trailing edge of said film piece (3c) is transferable from said winding mandrel (7) onto said concave inner surface (11a), a pressing surface (13) rendering the interengaging film areas able to be pressed to the concave inner surface (11 a) in an overlapping area (14) between said leading edge and said trailing edge, said sealing device (15) rendering a sealing procedure for connecting the overlapping area (14) releasable, said concave inner surface (11 a) being movable relative to said can body (2), so that said film piece (3d) closed in the shape of a cylinder shell may be supplied to said can body (2) and may, at least partially, engage said can body (2) by means of a shrinking procedure.

8. Device according to claim 7, **characterised in that** said convex pressing surface (13) is movable by means of an actuation device (7c), preferably being arranged on said winding mandrel (7), which in particular renders achievable a pressing force abutting on said concave inner surface (11 a), wherein, in particular, said convex pressing surface (13) is formed broader than said overlapping area (14) and/or is resilient and/or is formed from a material that is unable to be brought into an adhering connection with the sealing layer.

9. Device according to claim 7 or 8, **characterised in that** said sealing device (15) comprises a sealing surface (15a) capable to be heated on said concave inner surface (11 a), which faces said convex pressing surface (13), to which optionally joins a respective insulation area (16) on either side in peripheral direction.

10. Device according to any one of claims 7 to 9, **characterised in that** the device comprises at least one turn station (18a, 18b), which on a circular path comprises reception means (19) for holding can bodies (2) at equal distances, a respective winding mandrel (7) being assigned to each reception means (19), and a holding device (11) having a concave inner surface (11 a).

11. Device according to any one of claims 7 to 10, **characterised in that** said at least one shrinking device for carrying out the shrinking procedure renders capable to be supplied with heat to at least a partial area of said film piece (3d) transferred onto said can body (2), wherein heat is preferably supplied in the form of radiant heat and/or contact heat, in particular by means of hot air, but in some cases by induction via said can body (2).

12. Device according to any one of claims 7 to 11, **characterised in that** a connection device for carrying out a connection procedure renders capable to be supplied with heat to at least a partial area of said film piece (3d), and optionally a pressing force, so that a sealing connection between at least a partial area of the film piece (3d) and said can body (2) is achieved, wherein heat is preferably supplied by induction via said can body (2), but optionally in the form of radiant heat and/or contact heat.

13. Method according to any of claims 1 to 6, **characterised in that** for imprinting the film web (3b), its portions are arranged on containers, at least one printing step of the transfer process is carried out, in which at least one, preferably at least two, in particular however three to five, different inks are transferred onto a transferring surface (27), and are transferred from the transferring surface (27) in a step as a transfer printing layer onto one side of said film web (3b).

14. Method according to claim 13, **characterised in that** one side of said film web (3b) is provided with a pre-print (3f) and/or a sealing layer (3g) already prior to the printing step of the transfer process, preferably by means of an intaglio printing process, wherein as preferred the transfer printing layer (3h) and the pre-print (3f) are applied to different sides of said film web (3b), the pre-print (3f) forms a ground-coat or a ground décor and is optionally covered with a sealing layer (3g).

## Revendications

1. Procédé de fabrication d'un corps de canette (2), dans lequel une pièce de film (3c) est coupée d'un lé de film (3b), et la pièce de film (3c) est bobinée de son bord avant jusqu'à son bord arrière sur un mandrin de bobinage (7) et est maintenue au mandrin de bobinage (7) d'une manière quelque peu chevauchante, **caractérisé en ce, que** la pièce de film (3c) est transmise du mandrin de bobinage (7) à une surface intérieure concave (11a), et les superficies de films, qui contactent l'une à l'autre, du bord avant et du bord arrière sont cachetées l'une avec l'autre dans la superficie chevauchante (14) à la surface intérieure concave (11a).

2. Procédé selon la revendication 1, **caractérisé en ce, que** la surface intérieure concave (11a) est formé à un dispositif de support (11), et que la pièce de film fermée en forme d'une enveloppe cylindrique (3d), après le cachetage à la superficie chevauchante (14), est mis de la surface intérieure concave (11a) à un corps de canette (2) et est mis au moins partiellement contre le corps de canette (2) au moyen d'au moins un procédé de contraction.

3. Procédé selon la revendication 1 ou 2, **caractérisé en ce, que** pour le cachetage des superficies de films, qui contactent l'une à l'autre, une surface convexe de pression (13) est pressée vers l'extérieure contre la surface intérieure concave (11a) dans la superficie chevauchante (14), tout en réalisant ainsi une pression de cachetage et une température de cachetage dans la superficie chevauchante (14), dans lequel la chaleur requise pour le cachetage de la superficie chevauchante (14), de préférence, est conduite à travers la surface intérieure concave (11 a), en particulier à travers une surface partielle (15a) de la surface intérieure concave (11a).

4. Procédé selon la revendication 3, **caractérisé en ce, que** la surface convexe de pression (13) est actionnée par un dispositif d'actionnement, dans lequel un appui peut être réalisé pendant le pressage à la surface intérieure concave (11a) et/ou la surface convexe de pression (13) est plus large que la superficie chevauchante (14) et/ou est formé d'une façon souple et/ou d'un matériau incapable d'entrer en connexion adhérente avec la couche de cachetage.

5. Procédé selon une quelconque des revendications 2 à 4, **caractérisé en ce, qu'**ayant formé la connexion de cachetage dans la superficie chevauchante (14), le mandrin de bobinage (7) et la partie de support (11) avec l'enveloppe fermée de film (3d) et ensuite le corps de canette (2) et la partie de support (11) avec l'enveloppe fermée de film (3d) sont mus relativement l'un à l'autre de manière, que l'enveloppe de film (3d) est disposée autour du corps de canette (2) et est amenée en contact tenant avec le corps de canette (2) par un premier procédé de contraction au moins dans une superficie annulaire et, le cas échéant, est contractée complètement au corps de canette (2) par un deuxième procédé de contraction, réalisé de préférence à l'extérieur de la partie de support (11), la chaleur pour l'au moins un procédé de contraction étant amenée préférablement en forme de chaleur rayonnante et/ou de contact, en particulier au moyen de l'air chaud, mais le cas échéant aussi par induction à travers le corps de canette (2).

6. Procédé selon une quelconque des revendications 1 à 5, **caractérisé en ce, que** pour réaliser un procédé de connexion, de la chaleur, et le cas échéant une force de pression aussi, est/sont amenée(s) à au moins une superficie partielle de la pièce de film (3d) transmise au corps de canette (2) de manière, qu'une connexion de cachetage est réalisée au moins entre une superficie partielle de la pièce de film (3d) et le corps de canette (2), la chaleur étant amenée de préférence par induction à travers le corps de canette (2), mais le cas échéant en forme de chaleur rayonnante et/ou de contact.

7. Dispositif pour appliquer une pièce de film (3c) à un corps de canette (2), comprenant au moins un moyen de réception pour tenir un corps de canette (19), un dispositif d'alimentation (4-6) pour alimenter des pièces de film (3c), au moins un mandrin de bobinage (7) auquel les pièces de film (3c) peuvent être bobinées tout en adhérant de manière, qu'elles sont tenues au mandrin de bobinage (7) avec son bord avant et son bord arrière d'une façon quelque peu chevauchante, et au moins un dispositif de cachetage (15) capable à être chauffé, **caractérisé en ce, qu'**un dispositif de support (11) ayant une surface intérieure concave (11a) est formé et est mobile relativement au mandrin de bobinage (7) d'une manière, qu'au moins une superficie partielle de la pièce de film (3c) avec le bord avant et le bord arrière de la pièce de film (3c) peut être transmise du mandrin de bobinage (7) à la surface intérieure concave (11 a), qu'une surface de pression (13) rend il possible de presser les superficies de film contactant l'une à l'autre entre le bord avant et le bord arrière à la surface intérieure concave (11a), le dispositif de cachetage (15) rend il possible de déclencher un procédé de cachetage pour connecter la superficie chevauchante (14), et la surface intérieure concave (11a) est mobile relativement au corps de canette (2) de manière, que la pièce de film fermée en forme d'une enveloppe cylindrique (3d) peut être amenée au corps de canette (2) et peut être appliquée au moins partiellement au corps de canette (2) par un dispositif de contraction.

8. Dispositif selon la revendication 7, **caractérisé en ce, que** la surface de pression (13) convexe est mobile au moyen d'un dispositif d'actuation (7c), qui de préférence est disposé au mandrin de bobinage (7), rendant en particulier réalisable une force de pression, qui s'appuie à la surface intérieure concave (11a), la surface de pression (13) convexe étant en particulier plus large que la superficie chevauchante (14) et/ou est formé d'une façon souple et/ou d'un matériau incapable d'entrer en connexion adhérente avec la couche de cachetage.

9. Dispositif selon la revendication 7 ou 8, **caractérisé en ce, que** le dispositif de cachetage (15) comprend une surface de cachetage (15a) en face de la surface de pression (13) convexe, qui est capable d'être chauffée et est située à la surface intérieure concave (11a), une superficie d'isolation (16) respective se joignant, le cas échéant, au deux côtés en direction périphérique.

10. Dispositif selon une quelconque des revendications 7 à 9, **caractérisé en ce, que** le dispositif comprend au moins une station tournante (18a, 18b), qui comprend des moyens de réception (19) situés en distances égaux à une ligne circulaire pour tenir des corps de canette (2), un mandrin de bobinage (7) et un dispositif de support (11) ayant une surface intérieure concave (11a) étant associés à chaque moyen de réception (19).

11. Dispositif selon une quelconque des revendications 7 à 10, **caractérisé en ce, que** l'au moins un dispositif de contraction pour réaliser le procédé de contraction rend possible d'alimenter au moins une superficie partielle de la pièce de film (3d) transmise au corps de canette (2) en chaleur, la chaleur étant alimentée de préférence en forme de chaleur rayonnante et/ou de contact, en particulier au moyen de l'air chaud, mais le cas échéant aussi par induction à travers le corps de canette (2).

12. Dispositif selon une quelconque des revendications 7 à 11, **caractérisé en ce, qu'**un dispositif de connexion pour réaliser un procédé de connexion rend possible d'alimenter au moins une superficie partielle de la pièce de film (3d) transmise au corps de canette (2) en chaleur, et le cas échéant en une force de pression aussi de manière, qu'une connexion de cachetage est réalisée au moins entre superficie partielle de la pièce de film (3d) et le corps de canette (2), la chaleur étant alimentée de préférence par induction à travers le corps de canette (2), mais le cas échéant en forme de chaleur rayonnante et/ou de contact.

13. Procédé selon une quelconque des revendications 1 à 6, **caractérisé en ce, que** pour imprimer le lé de film (3b) les tronçons de celui-ci sont disposés aux vaisseaux, qu'au moins une étape d'impression par un procédé de transfert est réalisée, dans laquelle au moins une, préférablement au moins deux, mais en particulier trois à cinq, encres différentes sont transférées à une surface de transfert (27) et sont transférées de la surface de transfert (27) dans une étape à un côté du lé de film (3b) comme une couche d'impression par transfert.

14. Procédé selon la revendication 13, **caractérisé en ce, qu'**un côté du lé de film (3b) est pourvu d'un imprimé préalable (3f) et/ou d'une couche de cachetage (3g) déjà avant l'étape d'impression par un procédé de transfert, préférablement par un procédé d'impression en creux, dans lequel la couche d'impression par transfert (3h) et l'impression préalable (3f) sont appliqués de préférence aux côtés différents du lé de film (3b), l'impression préalable formant une couche de fond ou un décor de fond et est couverte, le cas échéant, par une couche de cachetage (3g).
